# EUROPEAN PATENT APPLICATION

(11) **EP 4 529 037 A1**
(43) Date of publication of application: **26.03.2025**
(21) Application number: 23827492.2
(22) Date of filing: 20.06.2023
(51) Int. Cl.: H04B 7/08, H04B 7/06, H04W 72/23, H04W 72/04, H04W 24/10, H04W 16/28, H04B 17/345, H04L 5/00, H04L 5/14

(54) **METHOD AND DEVICE FOR MEASURING INTERFERENCE BETWEEN TERMINALS IN FULL-DUPLEX COMMUNICATION SYSTEM**

(30) Priority: 23.06.2022 KR 20220076912
(71) Applicant: Samsung Electronics Co., Ltd., Suwon-si, Gyeonggi-do 16677 (KR)
(72) Inventor: LEE, Kwonjong, Suwon-si, Gyeonggi-do 16677 (KR); KIM, Minchul, Suwon-si, Gyeonggi-do 16677 (KR); LEE, Juho, Suwon-si, Gyeonggi-do 16677 (KR); JANG, Youngrok, Suwon-si, Gyeonggi-do 16677 (KR); JUNG, Jungsoo, Suwon-si, Gyeonggi-do 16677 (KR)
(74) Representative: Nederlandsch Octrooibureau
(86) International application number: PCT/KR2023/008546
(87) International publication number: WO 2023/249380

(57) **Abstract**

The present disclosure relates to a 5G or 6G communication system for supporting a higher data transmission rate. According to various embodiments of the present disclosure, a method performed by a terminal supporting a full-duplex (FD) system in a wireless communication system may comprise the steps of: receiving, from a base station, an allocation of resources for receiving at least one cross-linked interference-reference signal (CLI-RS); determining, on the basis of the allocated resources, at least one CLI-RS reception beam from among a plurality of available beams; receiving, from at least one other terminal, a CLI-RS on the basis of the at least one CLI-RS reception beam; measuring interference with the at least one other terminal on the basis of the received CLI-RS; transmitting, to the base station, measurement information generated on the basis of the measurement result; receiving, from the base station, joint scheduling information on the basis of a downlink reception beam determined on the basis of the measurement information; and receiving, from the base station, a downlink signal through the downlink reception beam determined on the basis of the joint scheduling information.

## Description

### [Technical Field]

The disclosure generally relates to a wireless communication system and, more specifically, to a device and a method for efficiently measuring interference between terminals in a full-duplex (FD) system.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multi antenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

In particular, in a system employing a recent full duplex (FD) technology which allows an uplink (UL) and a downlink (DL) to use the same frequency resource at the same time, a base station may concurrently transmit or receive a UL and a DL to or from multiple terminals. However, since the same frequency resource is used at the same time, each of a UL signal and a DL signal may be transmitted or received within an overlapping resource area, and each signal using the overlapping resource area may cause interference to each other. Interference occurring between terminals in an FD system may be referred to as cross-linked interference (CLI). In order to solve the problems described above and enable smooth communication between a base station and multiple terminals, various technologies are being considered to minimize CLI between terminals.

### [Disclosure of Invention]

### [Technical Problem]

Based on the discussion described above, the disclosure is to provide a device and a method capable of effectively performing signal transmission and reception in a wireless communication system.

More specifically, the disclosure provides a device and a method for measuring a beam that minimizes interference between terminals and determining the beam as a beam for downlink or uplink data transmission and reception in a full-duplex (FD) system.

### [Solution to Problem]

According to various embodiments of the disclosure, a method performed by a terminal supporting a full-duplex (FD) system in a wireless communication system may include: receiving, from a base station, an allocation of resources for receiving at least one cross-linked interference-reference signal (CLI-RS); based on the allocated resources, determining at least one CLI-RS reception beam among multiple available beams; based on the at least one CLI-RS reception beam, receiving a CLI-RS from at least one other terminal; based on the received CLI-RS, measuring interference with the at least one other terminal; transmitting, to the base station, measurement information generated based on a result of the measurement; based on a downlink reception beam determined based on the measurement information, receiving co-scheduling information from the base station; and receiving a downlink signal from the base station via a downlink reception beam determined based on the co-scheduling information.

According to various embodiments of the disclosure, a method performed by a base station supporting a full-duplex (FD) system in a wireless communication system may include: allocating, to a first terminal, resources for receiving at least one cross-linked interference-reference signal (CLI-RS), and allocating, to a second terminal, resources for transmitting at least one CLI-RS; receiving a CLI-RS measurement report from the first terminal; based on the CLI-RS measurement report, determining a first beam for downlink reception of the first terminal and a second beam for uplink transmission of the second terminal; based on information on the determined first beam and second beam, providing the first terminal and the second terminal with co-scheduling information for the first terminal and the second terminal; and based on the co-scheduling information, transmitting a downlink signal to the first terminal and receiving an uplink signal from the second terminal.

According to various embodiments of the disclosure, a terminal supporting a full-duplex (FD) system in a wireless communication system may include at least one transceiver, and at least one processor functionally coupled to the at least one transceiver, wherein the at least one processor is configured to: receive, from a base station, an allocation of resources for receiving at least one cross-linked interference-reference signal (CLI-RS); based on the allocated resources, determine at least one CLI-RS reception beam among multiple available beams; based on the at least one CLI-RS reception beam, receive a CLI-RS from at least one other terminal; based on the received CLI-RS, measure interference with the at least one other terminal; transmit, to the base station, measurement information generated based on a result of the measurement; based on a downlink reception beam determined based on the measurement information, receive co-scheduling information from the base station; and receive a downlink signal from the base station via a downlink reception beam determined based on the co-scheduling information.

According to various embodiments of the disclosure, a base station supporting a full-duplex (FD) system in a wireless communication system may include at least one transceiver, and at least one processor functionally coupled to the at least one transceiver, wherein the at least one processor is configured to: allocate, to a first terminal, resources for receiving at least one cross-linked interference-reference signal (CLI-RS), and allocate, to a second terminal, resources for transmitting at least one CLI-RS; receive a CLI-RS measurement report from the first terminal; based on the CLI-RS measurement report, determine a first beam for downlink reception of the first terminal and a second beam for uplink transmission of the second terminal; based on information on the determined first beam and second beam, provide the first terminal and the second terminal with co-scheduling information for the first terminal and the second terminal; and based on the co-scheduling information, transmit a downlink signal to the first terminal and receive an uplink signal from the second terminal.

### [Advantageous Effects of Invention]

The disclosure provides a device and a method capable of efficiently providing services in a wireless communication system.

The disclosure provides a device and a method capable of performing effective signal transmission and reception in a wireless communication system.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a wireless environment network in a wireless communication system according to various embodiments of the disclosure;
FIG. 2 illustrates a functional structure of a base station in the wireless communication system according to various embodiments of the disclosure;
FIG. 3 illustrates a functional structure of a UE in the wireless communication system according to various embodiments of the disclosure;
FIG. 4 illustrates a specific structure of a communication unit of a base station or of a UE in the wireless communication system according to various embodiments of the disclosure;
FIG. 5 illustrates an example of a full-duplex (FD) base station communication environment and cross-linked interference (CLI) in the wireless communication system according to various embodiments of the disclosure;
FIG. 6 illustrates an example of measuring interference between multiple UEs and data channel scheduling based on the measurement in an FD system according to various embodiments of the disclosure;
FIG. 7 illustrates a signal flow for measuring interference between a base station and multiple UEs and data scheduling based on the measurement in the FD system according to various embodiments of the disclosure;
FIG. 8A to FIG. 8E illustrate various examples of resource allocation for transmission and reception of a base station according to various embodiments of the disclosure;
FIG. 9 illustrates a UE operation flow of receiving, from a base station, an allocation of resources for transmission and reception, so as to measure and report interference in the FD system according to various embodiments of the disclosure;
FIG. 10 illustrates a signal flow for interference measurement and reporting based on a single beam according to various embodiments of the disclosure;
FIG. 11A and FIG. 11B illustrate examples of single-beam determination for interference measurement according to various embodiments of the disclosure;
FIG. 12 illustrates a UE operation flow of interference measurement and reporting based on a single beam according to various embodiments of the disclosure;
FIG. 13 illustrates a signal flow for interference measurement and reporting based on multiple beams according to various embodiments of the disclosure;
FIG. 14A and FIG. 14B illustrate examples of determining multiple beams for interference measurement according to various embodiments of the disclosure;
FIG. 15 illustrates an example of measuring interference via beam sweeping based on multiple beams according to various embodiments of the disclosure;
FIG. 16 illustrates a UE operation flow of interference measurement and reporting based on multiple beams according to various embodiments of the disclosure;
FIG. 17 illustrates a signal flow for scheduling data channel transmission and reception, based on interference measurement according to various embodiments of the disclosure; and
FIG. 18 illustrates a base station operation flow of receiving an interference measurement report from a UE and performing scheduling in the FD system according to various embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software. In addition, terms referring to network entities, terms referring to device elements, and the like are illustratively used for the sake of descriptive convenience. Therefore, the disclosure is not limited by the terms as described below, and other terms referring to subjects having equivalent technical meanings may be used.

Furthermore, various embodiments of the disclosure will be described using terms employed in some communication standards (e.g., the 3rd generation partnership project (3GPP) and European telecommunication standards institute (ETSI)), but they are for illustrative purposes only. Various embodiments of the disclosure may be easily applied to other communication systems through modifications.

In the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

In the following description, terms referring to signals, terms referring to channels, terms referring to control information, terms referring to network entities, terms referring to device elements, and the like are illustratively used for the sake of descriptive convenience. Therefore, the disclosure is not limited by the terms as described below, and other terms referring to subjects having equivalent technical meanings may be used.

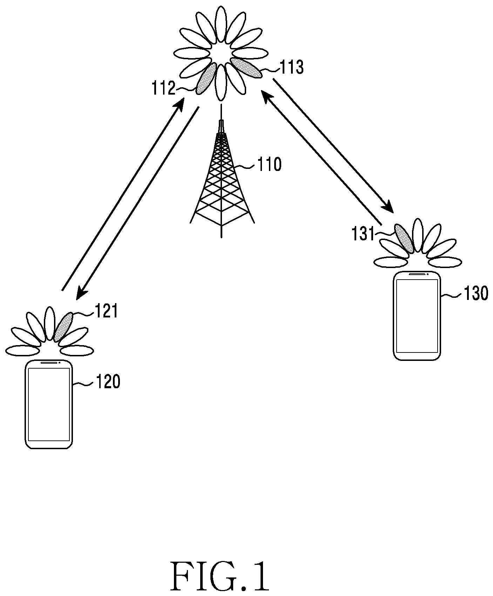

FIG. 1 illustrates a wireless environment network in a wireless communication system according to various embodiments of the disclosure. FIG. 1 illustrates a base station 110, a first UE 120, and a second UE 130, as parts of nodes using a radio channel in the wireless communication system. FIG. 1 illustrates only one base station, but may further include another base station that is the same as or similar to the base station 110.

The base station 110 is a network infrastructure that provides the UEs 120 and 130 with radio access. The base station 110 has coverage defined to be a predetermined geographic area, based on a distance over which a signal may be transmitted. The base station 110 may be referred to as not only "base station" but also "access point (AP)", "eNodeB (eNB)", "5th generation node (5G node)", "next generation nodeB (gNB)", "wireless point", "transmission/reception point (TRP)", or other terms having equivalent technical meanings.

Each of the first UE 120 and the second UE 130 is a device used by a user, and performs communication with the base station 110 via a radio channel. In some cases, at least one of the first UE 120 and the second UE 130 may be operated without involvement of a user. That is, at least one of the first UE 120 and the second UE 130 is a device that performs machine type communication (MTC) and may not be carried by a user. Each of the first UE 120 and the second UE 130 may be referred to as not only "user equipment (UE)" but also "terminal", "mobile station", "subscriber station", "remote terminal", "wireless terminal", "user device", or other terms having equivalent technical meanings.

The base station 110, the first UE 120, and the second UE 130 may transmit and receive wireless signals in a millimeter wave (mmWave) band (e.g., 28GHz, 30GHz, 38GHz, and 60GHz). In this case, in order to improve channel gain, the base station 110, the first UE 120, and the second UE 130 may perform beamforming. The beamforming may include transmission beamforming and reception beamforming. That is, the base station 110, the first UE 120, and the second UE 130 may assign directivity to a transmission signal or a reception signal. To this end, the base station 110 and the UEs 120 and 130 may select serving beams 112, 113, 121, and 131 via a beam search procedure or a beam management procedure. After the serving beams 112, 113, 121, and 131 are selected, communication may then be performed via resources that are in quasi co-located (QCL) relationship with resources in which the serving beams 112, 113, 121, and 131 are transmitted.

If large-scale characteristics of a channel, via which a symbol on a first antenna port has been transferred, can be inferred from a channel via which a symbol on a second antenna port has been transferred, it may be evaluated that the first antenna port and the second antenna port are in a QCL relationship. For example, the large-scale characteristics may include at least one of a delay spread, a Doppler spread, a Doppler shift, average gain, an average delay, and a spatial receiver parameter.

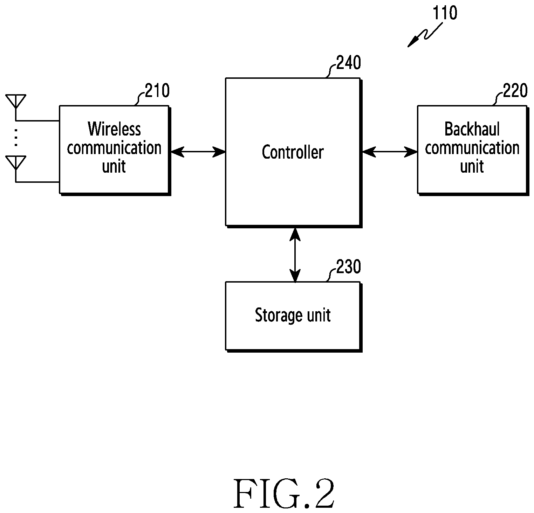

FIG. 2 illustrates a functional structure of a base station in the wireless communication system according to various embodiments of the disclosure. The structure illustrated in FIG. 2 may be understood as the structure of the base station 110. The terms "... unit", "... device", etc. used hereinafter may refer to a unit configured to process at least one function or operation, and may be implemented as hardware, software, or a combination of hardware and software.

Referring to FIG. 2, the base station includes a wireless communication unit 210, a backhaul communication unit 220, a storage unit 230, and a controller 240.

The wireless communication unit 210 performs functions to transmit and receive a signal via a wireless channel. For example, the wireless communication unit 210 performs a function of conversion between a baseband signal and a bitstream according to a physical layer specification of the system. For example, during data transmission, the wireless communication unit 210 generates complex symbols by encoding and modulating a transmission bitstream. In addition, during data reception, the wireless communication unit 210 restores a reception bitstream by demodulating and decoding a baseband signal.

In addition, the wireless communication unit 210 up-converts a baseband signal to a radio frequency (RF) band signal, transmits the up-converted RF band signal via an antenna, and then down-converts the RF band signal received via the antenna to a baseband signal. To this end, the wireless communication unit 210 may include a transmission filter, a reception filter, an amplifier, a mixer, an oscillator, a digital-to-analog converter (DAC), an analog-to-digital converter (ADC), and the like. In addition, the wireless communication unit 210 may include multiple transmission/reception paths. Furthermore, the wireless communication unit 210 may include at least one antenna array including multiple antenna elements.

In terms of hardware, the wireless communication unit 210 may include a digital unit and an analog unit, wherein the analog unit includes multiple sub-units according to an operation power, an operation frequency, and the like. The digital unit may be implemented as at least one processor (e.g., a digital signal processor (DSP)).

The wireless communication unit 210 transmits and receives a signal as described above. Accordingly, all or a part of the wireless communication unit 210 may be referred to as "transmitter", "receiver", or "transceiver". In addition, in the following description, transmission and reception performed via a wireless channel are used in a sense including processing performed as described above by the wireless communication unit 210.

The backhaul communication unit 220 provides an interface to perform communication with other nodes within a network. That is, the backhaul communication unit 220 converts, into a physical signal, a bitstream transmitted from the base station to another node, for example, another access node, another base station, a higher node, a core network, etc., and converts a physical signal received from another node into a bitstream.

The storage unit 230 stores data, such as a basic program, an application program, configuration information, and the like for operation of the base station. The storage unit 230 may include a volatile memory, a non-volatile memory, or a combination of a volatile memory and a non-volatile memory. The storage unit 230 provides stored data in response to a request of the controller 240.

The controller 240 controls overall operations of the base station. For example, the controller 240 transmits and receives a signal via the wireless communication unit 210 or the backhaul communication unit 220. In addition, the controller 240 records and reads data in the storage unit 230. The controller 240 may perform functions of a protocol stack required by the communication standards. According to another implementation example, the protocol stack may be included in the wireless communication unit 210. To this end, the controller 240 may include at least one processor.

According to various embodiments, the controller 240 may control the base station to perform operations according to various embodiments described below.

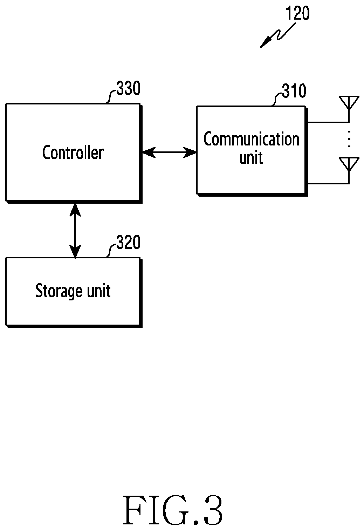

FIG. 3 illustrates a functional structure of a UE in the wireless communication system according to various embodiments of the disclosure. The structure illustrated in FIG. 3 may be understood as a structure of the UE 120. The terms "... unit", "... device", etc. used hereinafter may refer to a unit configured to process at least one function or operation, and may be implemented as hardware, software, or a combination of hardware and software.

Referring to FIG. 3, the UE may include a communication unit 310, a storage unit 320, and a controller 330.

The communication unit 310 performs functions for transmitting and receiving a signal via a wireless channel. For example, the communication unit 310 performs a function of conversion between a baseband signal and a bitstream according to a physical layer specification of the system. For example, during data transmission, the communication unit 310 generates complex symbols by encoding and modulating a transmission bitstream. When receiving data, the communication unit 310 restores a reception bitstream by demodulating and decoding a baseband signal. The communication unit 310 up-converts a baseband signal to an RF band signal, transmits the up-converted RF band signal via an antenna, and then down-converts the RF band signal received via the antenna to a baseband signal. For example, the communication unit 310 may include a transmission filter, a reception filter, an amplifier, a mixer, an oscillator, a DAC, an ADC, and the like.

Also, the communication unit 310 may include multiple transmission/reception paths. Further, the communication unit 310 may include at least one antenna array including multiple antenna elements. In terms of hardware, the communication unit 310 may include a digital circuit and an analog circuit (e.g., a radio frequency integrated circuit (RFIC)). The digital circuit and the analog circuit may be implemented in a single package. In addition, the communication unit 310 may include multiple RF chains. Further, the communication unit 310 may perform beamforming.

The communication unit 310 transmits and receives a signal as described above. Accordingly, all or a part of the communication unit 310 may be referred to as "transmitter", "receiver", or "transceiver". In addition, in the following description, transmission and reception performed via a wireless channel are used in a sense including processing performed as described above by the communication unit 310.

The storage unit 320 stores data, such as a basic program, an application program, configuration information, and the like for operation of the UE. The storage unit 320 may include a volatile memory, a non-volatile memory, or a combination of a volatile memory and a non-volatile memory. In addition, the storage unit 320 provides stored data in response to a request of the controller 330.

The controller 330 controls overall operations of the UE. For example, the controller 330 transmits and receives a signal via the communication unit 310. In addition, the controller 330 records and reads data in the storage unit 320. The controller 330 may perform functions of a protocol stack required by communication standards. To this end, the controller 330 may include at least one processor or micro-processor, or may be a part of a processor. In addition, a part of the communication unit 310 and the controller 330 may be referred to as a communication processor (CP).

According to various embodiments, the controller 330 may control the UE to perform operations according to various embodiments described below.

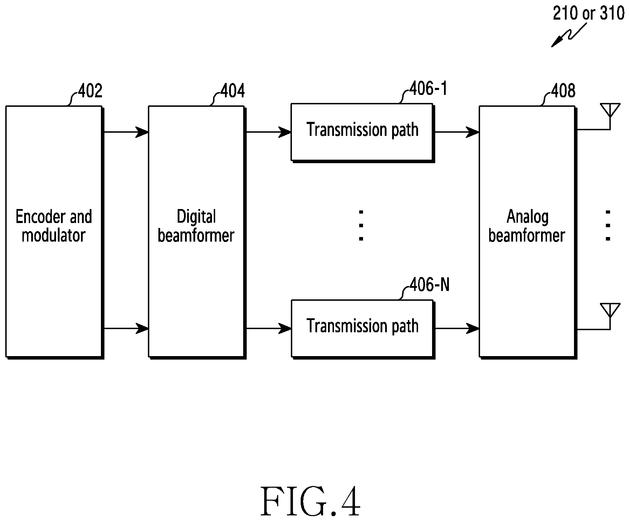

FIG. 4 illustrates a structure of a communication unit in the wireless communication system according to various embodiments of the disclosure. FIG. 4 illustrates an example of a detailed structure of the wireless communication unit 210 of FIG. 2 or the communication unit 310 of FIG. 3. Specifically, FIG. 4 illustrates elements to perform beamforming, as a part of the wireless communication unit 210 of FIG. 2 or the communication unit 310 of FIG. 3.

Referring to FIG. 4, the wireless communication unit 210 or the communication unit 310 includes an encoder and modulator 402, a digital beamformer 404, multiple transmission paths 406-1 to 406-N, and an analog beamformer 408.

The encoder and modulator 402 performs channel encoding. For channel encoding, at least one among a low-density parity check (LDPC) code, a convolution code, and a polar code may be used. The encoder and modulator 402 generates modulation symbols by performing constellation mapping.

The digital beamformer 404 performs beamforming on a digital signal (e.g., modulation symbols). To this end, the digital beamformer 404 multiplies modulation symbols by beamforming weights. Here, the beamforming weights are used to change a magnitude and a phase of a signal, and may be referred to as "precoding matrix", "precoder", or the like. The digital beamformer 404 outputs digital-beamformed modulation symbols to the multiple transmission paths 406-1 to 406-N. According to a multiple-input multiple-output (MIMO) transmission technique, the modulation symbols may be multiplexed or the same modulation symbols may be provided to the multiple transmission paths 406-1 to 406-N.

The multiple transmission paths 406-1 to 406-N convert digital beamformed-signals into analog-signals. To this end, each of the multiple transmission paths 406-1 to 406-N may include an inverse fast Fourier transform (IFFT) operator, a cyclic prefix (CP) inserter, a DAC, and an up-converter. The CP inserter is for an orthogonal frequency division multiplexing (OFDM) scheme, and may be excluded when another physical layer scheme (e.g., a filter bank multi-carrier (FBMC)) is applied. That is, the multiple transmission paths 406-1 to 406-N provide independent signal processing processes to multiple streams generated via digital beamforming. However, depending on an implementation scheme, some elements of the multiple transmission paths 406-1 to 406-N may be used in common.

The analog beamformer 408 performs beamforming on an analog signal. To this end, the digital beamformer 404 multiplies analog signals by beamforming weights. In this case, the beamforming weights are used to change a magnitude and a phase of a signal. Specifically, according to a connection structure between the multiple transmission paths 406-1 to 406-N and antennas, the analog beamformer 440 may be configured in various manners. For example, each of the multiple transmission paths 406-1 to 406-N may be connected to one antenna array. As another example, the multiple transmission paths 406-1 to 406-N may be connected to one antenna array. As another example, the multiple transmission paths 406-1 to 406-N may be adaptively connected to one antenna array or may be connected to two or more antenna arrays.

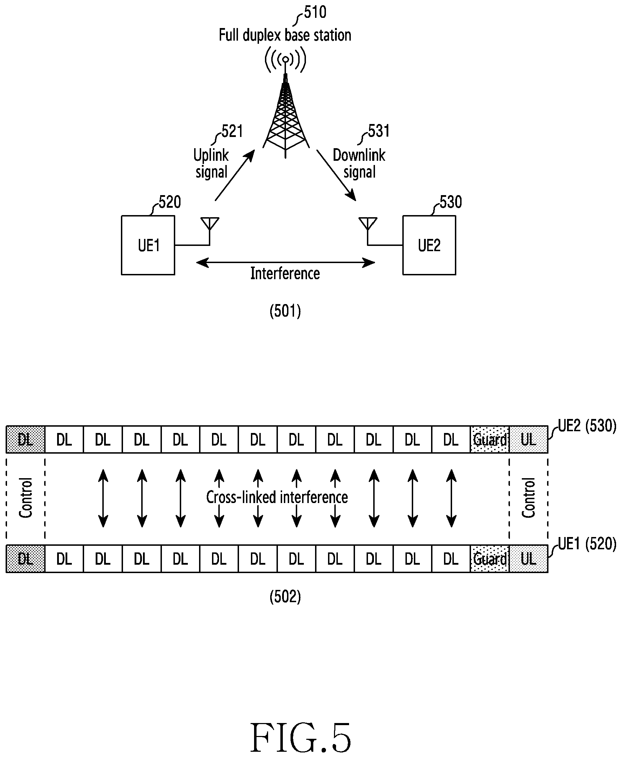

FIG. 5 illustrates an example of a full-duplex (FD) base station communication environment and cross-linked interference (CLI) in the wireless communication system according to various embodiments of the disclosure.

Due to the increase in services requiring high-speed data transmission and the development of the Internet of things (IoT), there is a continuous demand for improving efficiency of spectrum resources in a wireless network. Accordingly, various studies have been conducted to improve a bandwidth, a data transmission rate, etc. Among the studies, an in-band FD communication system has been spotlighted as a next-generation technology to improve efficiency of insufficient frequency resources.

In-band FD communication is a wireless communication technology for simultaneously performing transmission and reception in the same frequency band. Theoretically, twofold network throughput may be obtained in the FD communication compared to half-duplex (HD) communication that uses the same frequency band, but since signal transmission and reception are performed simultaneously in the same frequency band, a transmitted signal may interfere with a signal to be received. Specifically, since transmission and reception between a base station and multiple UEs are performed simultaneously in FD communication, a signal transmitted by a UE may interfere with a signal received by another UE, and this interference signal may be defined to be cross-linked interference (CLI).

According to various embodiments of the disclosure, the full-duplex (FD) communication described below may include not only in-band FD communication, but also subband FD communication or cross division duplex (XDD) FD communication, etc.

Subband FD communication may provide mixed subcarrier use and asynchronous transmission in order to flexibly apply full-duplex communication. A subband full-duplex communication system may divide the entire system bandwidth into subbands, and then simultaneously transmit uplink and downlink data for each subband. In this case, all transmission and reception procedures including synchronization may be performed based on the divided subbands, so that subcarrier application and asynchronous uplink transmission may be performed differently for each subband. Such subband-specific transmission may cause interference between subbands, and various methods to prevent interference may be applied according to various embodiments of the disclosure.

In order to improve coverage of a base station and a UE, XDD FD communication may include, under a time division duplex (TDD) system, a scheme in which uplink and downlink resources are divided in the frequency domain like in a frequency division duplex (FDD) system, rather than dividing a ratio only in the time domain according to a traffic proportion of uplink and downlink. Since XDD FD communication is a scenario in which transmission and reception in the time domain and transmission and reception in the frequency domain coexist, interference may occur, and thus various methods for preventing interference may be applied according to various embodiments of the disclosure.

Referring to a wireless communication environment 501 of FIG. 5, in an FD base station environment, a base station 510 may perform unidirectional FD communication including a first UE 520 and a second UE 530. Each of the two UEs 520 and 530 of UL and DL, which communicates with the base station 510, may perform HD communication with the base station. In this case, in the FD base station environment, an uplink signal 521 transmitted by the first UE 520 and a downlink signal 531 received by the second UE 530 may be transmitted and received via the same frequency at the same time, so that interference may occur.

Referring to an example 502 of time axis interference symbols of FIG. 5, an example of time axis interference due to signal interference between the UEs in the FD base station environment is illustrated. In the FD base station environment, uplink or downlink transmission and reception on the same slot (or symbol) may be configured for the first UE 520 and the second UE 530 sharing the same frequency. In this case, since the uplink signal 521 transmitted by the first UE 520 and the downlink signal 531 received by the second UE 530 are transmitted and received at the same time, cross-linked interference (CLI) may occur between the signals.

According to various embodiments of the disclosure, the disclosure describes a method and a device for minimizing interference that may occur during a procedure in which a base station of the FD system transmits and receives data channels (e.g., a physical downlink shared channel (PDSCH) and a physical uplink shared channel (PUSCH)) to and from at least one UE. Specifically, a description is provided for a technology in which a base station allocates, to at least one UE, resources for cross-linked interference-reference signal (CLI-RS) transmission and reception, and based on the resource allocation, receives a report on CLI-RS measurement and CLI-RS transmission and reception between the at least one UE and performs data channel transmission and reception, thereby minimizing interference between the at least one UE.

In various embodiments described below, interference occurring between downlink or uplink signal transmission and reception of respective UEs in the FD system may be referred to as CLI. However, according to various embodiments of the disclosure, interference occurring between signal transmission and reception of respective UEs in the FD system is not limited to CLI, and may be referred to as various terms, such as UE-to-UE interference and full-duplex (FD) interference. In addition, in various embodiments described below, a CLI-RS may also be referred to as various terms interpreted as a reference signal for measuring interference between UEs, such as a CLI measurement RS, a cross-linked channel state information RS, a UE-to-UE channel information RS, or an equivalent term.

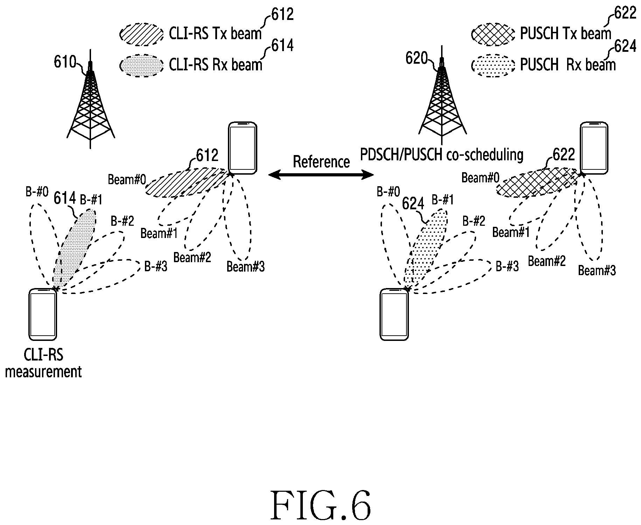

FIG. 6 illustrates an example of measuring interference between multiple UEs and data channel scheduling based on the measurement in the FD system according to various embodiments of the disclosure. Specifically, referring to FIG. 6, an example of scheduling by measuring UE-to-UE interference at a beam level in the FD system is illustrated.

Although not illustrated in FIG. 6, a base station may allocate, to at least one UE within coverage of the base station, resources for uplink or downlink transmission and reception. The resources allocated by the base station to the at least one UE may be resources for at least one beam.

Referring to FIG. 6, the at least one UE to which resources for transmission and reception have been allocated by the base station may perform cross-linked interference-reference signal (CLI-RS) measurement 610. Specifically, prior to CLI-RS measurement, the at least one UE may determine a beam for CLI-RS transmission and reception. The at least one UE may determine at least one beam among multiple available beams, based on the allocated resources for CLI-RS transmission and reception. According to an embodiment, the at least one UE may determine a beam to be mapped or grouped to the allocated resources and perform beamforming. For example, one or more UEs among the at least one UE may be CLI-RS transmission UEs and determine a CLI-RS transmission beam (CLI-RS Tx beam), and another one or more UEs may be CLI-RS reception UEs and determine a CLI-RS reception beam (CLI-RS Rx beam). As illustrated in FIG. 6, the CLI-RS transmission UE may determine at least one CLI-RS transmission beam (beam#0) 612 among available multiple beams (beam#0, beam#1, beam#2, and beam#3), and the CLI-RS reception UE may determine at least one CLI-RS reception beam (B-#0) 614 among available multiple beams (B-#0, B-#1, B-#2, and B-#3). The CLI-RS transmission UE and the CLI-RS reception UE may transmit and receive CLI-RSs based on the determined beams 612 and 614, respectively. In this case, the CLI-RS reception UE may refer to a CLI-RS measurement UE, and may measure interference (e.g., CLI) based on a received CLI-RS. The CLI-RS reception UE having measured interference may report information on the measurement to the base station. Referring to FIG. 6, it is illustrated that there are one CLI-RS transmission UE and one CLI-RS reception UE, respectively, and there are one CLI-RS transmission beam and one CLI-RS reception beam determined by the UEs, respectively, but the disclosure is not limited thereto. According to various embodiments of the disclosure, the CLI-RS transmission or reception UE may include at least one UE, and the CLI-RS transmission or reception beam determined by each UE may include at least one beam.

Referring to FIG. 6, a base station may perform data channel (e.g., PUSCH and PDSCH) scheduling 620 for at least one UE, based on the received CLI-RS measurement information. According to various embodiments of the disclosure, in the FD system, the base station may perform data channel scheduling for at least one UE at the same frequency at the same time. According to an embodiment, the base station may perform signal transmission and reception scheduling using a PUSCH transmission beam 622 determined for at least one CLI-RS transmission UE, while concurrently performing signal transmission and reception scheduling using a PDSCH reception beam 624 determined for at least one CLI-RS reception UE. According to an embodiment, in the FD system of the base station, concurrent signal scheduling for at least one UE may be referred to as PDSCH/PUSCH co-scheduling.

In addition, the base station may determine, based on reported CLI-RS measurement, at least one beam of at least one UE or a pair of UEs enabling interference to be minimized. In addition, the base station may determine the determined UEs or at least one beam as UEs or at least one beam for data channel transmission and reception. Referring to FIG. 6, the CLI-RS transmission UE is illustrated as a UL UE for uplink signal (e.g., PUSCH) transmission and the CLI-RS reception UE is illustrated as a DL UE for downlink signal (e.g., PDSCH) transmission, and the PUSCH transmission beam 622 scheduled for the UL UE is illustrated as being identical to the determined CLI-RS transmission beam 612, and the PDSCH reception beam 624 scheduled for the DL UE is illustrated as being identical to the determined CLI-RS reception beam 614. Of course, according to various embodiments of the disclosure, the disclosure is not limited to the example described above, the PUSCH transmission beam 622 for signal transmission scheduled for the UL UE may be a beam having a quasi-co-located (QCL) relationship that is not the same as that for the determined CLI-RS transmission beam 612, and the PDSCH reception beam 624 for signal reception scheduled for the DL UE may be a beam having a QCL relationship that is not the same as that for the determined CLI-RS reception beam 614.

In addition, according to various embodiments of the disclosure, the PUSCH transmission beam 622 may be a beam corresponding to the determined CLI-RS reception beam 614. The PDSCH reception beam 624 scheduled for the DL UE may be a beam having a QCL relationship that is not the same as that for the determined CLI-RS reception beam 614, and the PDSCH reception beam 624 may be a beam corresponding to the determined CLI-RS transmission beam 612. For example, the base station may schedule CLI-RS transmission beam 612 as a beam for downlink signal reception for the CLI-RS transmission UE, and may also schedule the CLI-RS reception beam 614 as a beam for uplink signal transmission for the CLI-RS reception UE.

According to an embodiment, co-scheduling of the base station may be performed based on measurement information reported from the CLI-RS measurement UE (e.g., the CLI-RS reception UE), but is not limited thereto, and a CLI-RS measurement beam and a data channel beam may not necessarily match. In addition, according to an embodiment, in the disclosure, co-scheduling for data channel transmission and reception is described, but is not limited thereto, and transmission and reception of various signals for uplink or downlink may be included.

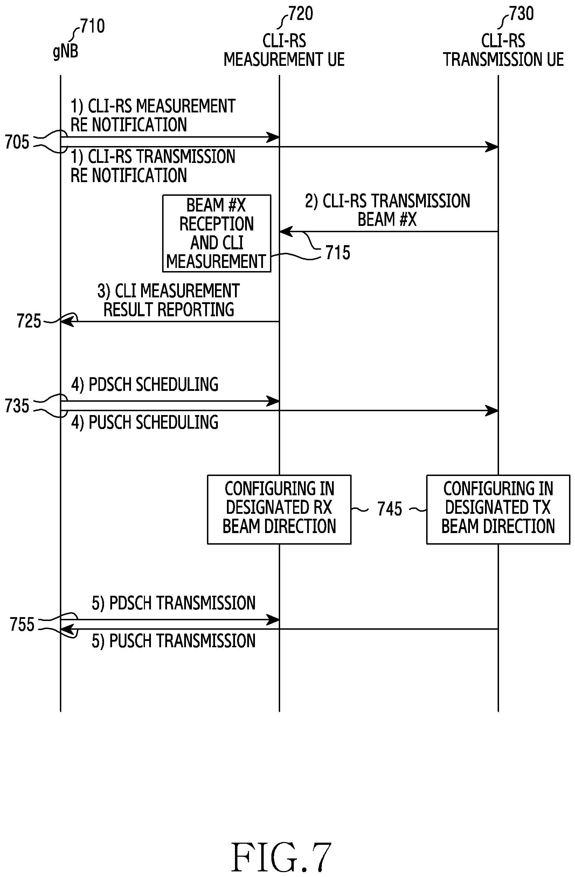

FIG. 7 illustrates a signal flow for measuring interference between a base station and multiple UEs and data scheduling based on the measurement in the FD system according to various embodiments of the disclosure. Specifically, referring to FIG. 7, a signal flow for data channel transmission and reception with minimized interference between a base station (e.g., gNB) 710, a CLI-RS measurement UE 720, and a CLI-RS transmission UE 730 in the FD system is illustrated. According to an embodiment, the CLI-RS measurement UE 720 may be a CLI-RS reception UE. According to various embodiments of the disclosure, hereinafter, a reference signal for interference measurement may be referred to as a CLI-RS, but is not limited thereto. In addition, a reference signal for interference measurement may also be referred to as various terms interpreted as a reference signal for measuring interference between UEs, such as a CLI measurement RS, a cross-linked channel state information RS, a UE-to-UE channel information RS, or an equivalent term.

In step 705, the base station 710 may configure CLI measurement for the CLI-RS measurement UE 720 and the CLI-RS transmission UE 730. Specifically, the base station 710 may allocate resources for reception or transmission, to the CLI-RS measurement UE 720 and the CLI-RS transmission UE 730, respectively. According to an embodiment, information on the resources allocated by the base station 710 may include information on a CLI-RS ID (or index) mapped or grouped for each resource.

According to an embodiment, the resources allocated by the base station to each UE may be mapped or grouped to one or more beams. In addition, according to an embodiment, beam information may be explicitly designated in the resources allocated by the base station 710 to each UE. That is, at least one beam may be mapped or grouped in resources for CLI-RS reception or transmission, which are allocated by the base station 710 to the CLI-RS measurement or transmission UE, but the disclosure is not limited thereto. According to various embodiments of the disclosure, the base station may indicate only a CLI-RS resource identifier (ID) for the allocated resources, and the at least one beam to be mapped or grouped may be determined by the UE. In step 705, it is illustrated that there is one UE for CLI-RS measurement and one UE for CLI-RS transmission. However, according to various embodiments of the disclosure, the disclosed is not limited thereto, and the base station may allocate resources for CLI-RS transmission or CLI-RS measurement to or one or more CLI-RS transmission UEs or one or more CLI-RS measurement UEs.

In step 715, the CLI-RS transmission UE 730 may transmit a CLI-RS to the CLI-RS measurement UE 720 via a CLI-RS transmission beam determined based on the allocated resources for CLI-RS transmission. According to an embodiment, the CLI-RS transmission beam determined by the CLI-RS transmission UE may include at least one beam, and CLI-RS transmission may be performed in accordance with the determined at least one CLI-RS transmission beam. That is, the CLI-RS transmission UE may perform beam sweeping during CLI-RS transmission. According to an embodiment, the beam sweeping may include reception side beam coordination or transmission side beam coordination. According to an embodiment, the CLI-RS reception UE may receive information on the CLI-RS transmission beam (e.g., fixed beam) from the CLI-RS transmission UE, and may identify at least one CLI-RS reception beam based on the received information. The CLI-RS reception UE may transmit information on the identified CLI-RS reception beam to the CLI-RS transmission UE. The CLI-RS reception UE may receive the CLI-RS based on information on the CLI-RS transmission beam and the identified CLI-RS reception beam. According to an embodiment, the CLI-RS transmission UE may receive information on the CLI-RS reception beam (e.g., fixed beam) from the CLI-RS reception UE, and may identify at least one CLI-RS transmission beam based on the received information. The CLI-RS transmission UE may transmit information on the identified CLI-RS transmission beam to the CLI-RS reception UE. The CLI-RS transmission UE may transmit the CLI-RS based on the information on the CLI-RS reception beam and the identified CLI-RS transmission beam. For example, during reception side beam coordination (or sweeping), the transmission beam may be fixed, and the reception UE may perform measurement by sequentially applying the reception beam. On the contrary, during transmission side beam coordination, the reception beam may be fixed, and measurement may be performed by sequentially applying the transmission beam. In the above descriptions, the transmission side UE and the reception side UE may provide, to each other, beam information (e.g., the fixed beam or sequentially applied beam) for beam sweeping in order to perform beam sweeping.

The CLI-RS measurement UE 720 may receive the CLI-RS from the CLI-RS transmission UE 730 via the CLI-RS reception beam determined based on the allocated resources for CLI-RS reception. According to an embodiment, the CLI-RS reception beam determined by the CLI-RS reception UE may include at least one beam, and CLI-RS reception may be performed in accordance with the determined at least one CLI-RS reception beam. That is, the CLI-RS reception UE may perform beam sweeping during CLI-RS reception. The aforementioned beam sweeping may include reception side beam fixation or transmission side beam fixation. To this end, the CLI-RS reception UE may transmit and receive beam information (e.g., the fixed beam or sequentially applied beam) for beam sweeping with the CLI-RS measurement UE. According to an embodiment, the CLI-RS reception UE may receive information on the CLI-RS transmission beam (e.g., fixed beam) from the CLI-RS transmission UE, and may identify at least one CLI-RS reception beam based on the received information. The CLI-RS reception UE may transmit information on the identified CLI-RS reception beam to the CLI-RS transmission UE. The CLI-RS reception UE may receive a CLI-RS based on information on the CLI-RS transmission beam and the identified CLI-RS reception beam. According to an embodiment, the CLI-RS transmission UE may receive information on the CLI-RS reception beam (e.g., fixed beam) from the CLI-RS reception UE, and may identify at least one CLI-RS transmission beam based on the received information. The CLI-RS transmission UE may transmit information on the identified CLI-RS transmission beam to the CLI-RS reception UE. The CLI-RS transmission UE may transmit the CLI-RS based on the information on the CLI-RS reception beam and the identified CLI-RS transmission beam. For example, for transmission side fixation, the CLI-RS transmission UE may transmit information on the fixed beam to the CLI-RS reception UE, and the CLI-RS reception UE may transmit, to the CLI-RS transmission UE, information on CLI-RS reception beams that are sequentially changed and applied. In addition, the CLI-RS measurement UE 720 may perform CLI measurement based on the CLI-RS received from the CLI-RS transmission UE 730.

In step 725, the CLI-RS measurement UE 720 may report measured CLI information to the base station 710. According to an embodiment, the CLI-RS measurement UE 720 may report the CLI-RS measurement information to the base station 710 by using CLI-RS reporting resources allocated from the base station 710. According to various embodiments of the disclosure, the CLI-RS measurement UE 720 may report the CLI-RS measurement information to the base station 710 by various methods. Hereinafter, reporting methods that the CLI-RS measurement UE 720 may determine are described.

Method 1) Full CLI report: The CLI-RS measurement UE 720 may report, to the base station 710, all information on at least one beam pair used for CLI-RS transmission and reception.

Method 2) Smallest CLI report: The CLI-RS measurement UE 720 may report, to the base station 710, a CLI-RS index indicating at least one beam pair having a smallest interference value among measured CLI values. The index of the at least one beam pair having the smallest interference value, which is reported by the CLI-RS measurement UE 720, may be an index of at least one beam pair based on the CLI-RS received from at least one CLI-RS transmission UE. According to an embodiment, information reported by the CLI-RS measurement UE 720 may be an index for at least one beam pair including a beam pair having an N-th lowest interference value as well as an index for a beam pair having a lowest interference value. According to an embodiment, an N value may be preconfigured by the base station.

Method 3) CLI average report: The CLI-RS measurement UE 720 may calculate an average of interference values of all at least one beam pair used for CLI-RS transmission and reception, and report information on an average value to the base station 710.

Method 4) Threshold value-compared CLI report: The CLI-RS measurement UE 720 may report, based on a threshold value to the base station 710, interference values for at least one beam pair used for CLI-RS transmission and reception. Specifically, according to an embodiment, the CLI-RS measurement UE 720 may report, to the base station 710, information on one or more beam pairs having interference values equal to or smaller than the threshold value and index information thereof. According to an embodiment, the threshold value may be preconfigured by the base station 710, or may be predefined in the UE itself.

Method 5) Blacklist report: The CLI-RS measurement UE 720 may determine, as a blacklist, an index for a part of at least one beam pair used for CLI-RS transmission and reception, and report the blacklist. Specifically, the CLI-RS measurement UE 720 may determine the blacklist to be one or more beam pairs having high interference values and report the blacklist to the base station 710, and the base station 710 may perform scheduling for data channel transmission and reception, except for the one or more beam pairs included in the blacklist. According to an embodiment, the CLI-RS measurement UE 720 may determine, based on a specific reference interference value, the blacklist to be one or more beam pairs having interference values equal to or greater than the reference interference value, and the reference interference value may be configured by the base station or may be predefined in the UE itself. However, the method of determining a blacklist according to various embodiments of the disclosure is not limited thereto, and may include various methods, such as determining a blacklist to be one or more beam pairs in which a specific event has occurred.

As described above, the CLI-RS measurement UE 720 may determine at least one of method 1) to method 5) based on various reasons, such as feedback overhead, and may report the CLI-RS measurement information to the base station 710 via the determined method. However, according to various embodiments of the disclosure, the CLI-RS measurement information is not limited to being reported according to an individual method, and the CLI-RS measurement UE 720 may report the CLI-RS measurement information to the base station 710 via at least one of method 1) to method 5) or a combination thereof.

In step 735, the base station 710 may perform scheduling for the UE for DL reception or the UE for UL transmission, based on the CLI-RS measurement information. According to an embodiment, the base station 710 may determine respective beams for CLI-RS transmission and reception, based on a channel quality indicator (CQI) reported from at least one UE in addition to the CLI-RS measurement information reported from the CLI-RS measurement UE 720. The base station 710 may provide co-scheduling information to the DL UE and the UL UE, based on the determined beams.

Specifically, the base station 710 may indicate the UE to use, for DL or UL, a beam that has been used during CLI-RS measurement. For example, the base station 710 may determine an optimal beam pair based on the reported CLI-RS measurement information, and may configure or schedule a beam direction so that the UE may transmit and receive a data channel, etc. via the determined optimal beam pair.

The base station 710 may indicate, using the CLI-RS index, the transmission and reception beams used during DL/UL signal transmission and reception. According to an embodiment, the base station 710 may schedule UL transmission (e.g., PUSCH) for the CLI-RS transmission UE by indicating an index (e.g., a CLI-RS resource number) for the CLI-RS transmission beam including a beam pair determined to enable minimizing of interference among at least one beam used by the CLI-RS transmission UE 730 for CSI-RS transmission in step 715. Alternatively, the base station 710 may schedule DL transmission (e.g., PDSCH) for the CLI-RS measurement UE by indicating an index (e.g., a CLI-RS resource number) for the CLI-RS reception beam including a beam pair determined to enable minimizing of interference among at least one beam used by the CLI-RS measurement UE 730 for CSI-RS reception.

According to an embodiment, the base station 710 may estimate UE-to-UE CLI based on the reported CLI-RS measurement information, and may perform FD co-scheduling between UEs having low CLI values. According to an embodiment, the base station 710 may estimate CLI between beam pairs of the UEs, based on the reported CLI-RS measurement information, and may perform FD co-scheduling for a beam pair having a low CLI value. For example, according to an embodiment, the base station 710 may determine a UE pair having a smallest CLI-RS, based on the reported CLI-RS measurement information. The base station 710 may determine a pair of one CLI-RS measurement UE 720 and one CLI-RS transmission UE, which has a smallest interference value, based on CLI values between at least one CLI-RS measurement UE 720 and at least one CLI-RS transmission UE 730. To determine this, the base station 710 may use CLI-RS measurements between one CLI-RS measurement UE 720 and multiple CLI-RS transmission UEs 730, respectively. Alternatively, but not limited thereto, the base station 710 may use CLI-RS measurements between one CLI-RS transmission UE 730 and multiple CLI-RS measurement UEs 720, respectively.

However, the aforementioned examples are only examples, and the disclosure is not limited thereto. For example, there may be a situation where channel reciprocity is satisfied, for example, there may be a case where a condition, in which a channel quality is not significantly affected in general even if a downlink transmission/reception beam pair of a base station and a UE is used as an uplink transmission/reception beam pair, is satisfied. According to an embodiment, in various cases including a situation where channel reciprocity is satisfied, the base station 710 may, unlike the scheduling described above, schedule UL transmission (e.g., PUSCH) for the CLI-RS measurement UE 720 by indicating the index for the CLI-RS reception beam, and schedule DL reception (e.g., PDSCH) for the CLI-RS transmission UE 730 by indicating the index for the CLI-RS transmission beam.

According to an embodiment, for data transmission and reception via a single link between the base station 710 and each UE, beam indication signaling for indicating an optimal beam pair may be performed separately. For example, the base station and the UE may use a reference signal to determine an appropriate transmission/reception beam pair via beam management, beam sweeping, or the like. Referring to 5G NR standard specifications, the base station may transmit a transmission configuration indication (TCI) state including beam indication via downlink control information (DCI) to inform the UE that a downlink signal is being transmitted on the same beam as that for the configured RS. Therefore, beam indication signaling for the single-link communication described above may need to be distinguished from beam indication signaling based on CLI-RS according to various embodiments of the disclosure.

According to various embodiments of the disclosure, as the FD base station environment, in an asymmetric full-duplex system where DL or UL is co-scheduled for at least one UE, additional L1 signaling or radio resource control (RRC) signaling may be used separately from existing beam indication signaling in order to perform beam indication scheduling that minimizes interference between links with the respective UEs. According to an embodiment, the base station 710 may configure a beam for a data channel by using an additional separate bit of DCI to schedule data channel transmission and reception for each UE by using the CLI-RS index. According to an embodiment, during scheduling of data channel transmission and reception for each UE without using an additional separate bit, the base station 710 may configure a beam for a data channel by a method of separately configuring a bandwidth part (BWP).

In step 745, the CLI-RS measurement UE 720 which has been PDSCH-scheduled by the base station 710 may determine, based on the received beam index (e.g., the CLI-RS resource number) for CLI-RS reception, a beam configured for a certain time point according to the CLI-RS ID, on which the UE should operate, and may determine the determined beam as a reception beam for data channel reception. The CLI-RS transmission UE 730 which has been scheduled for PUSCH by the base station 710 may determine, based on the received beam index (e.g., the CLI-RS resource number) for CLI-RS transmission, a beam configured for a certain time point according to the CLI-RS ID, on which the UE should operate, and may determine the determined beam as a transmission beam for data channel transmission.

However, according to various embodiments of the disclosure, but not limited thereto, when channel reciprocity can be considered as described above, the CLI-RS measurement UE 720 may receive a beam index for CLI-RS reception along with PUSCH scheduling so as to determine a beam for uplink transmission, or the CLI-RS transmission UE 730 may receive a beam index for CLI-RS transmission along with PDSCH scheduling so as to determine a beam for downlink reception. Although not illustrated in FIG. 7, according to an embodiment, each UE may receive not only a CLI-RS beam index but also a beam indication indicating a beam pair via a single link, and the base station may separately configure one of multiple beam indications, which will be used to determine a data channel transmission/reception beam.

In step 755, each UE may transmit or receive a data channel signal by using the configured transmission beam or reception beam. According to an embodiment, the CLI-RS measurement UE 720 may receive a PDSCH transmitted from the base station in the configured reception beam direction, or the CLI-RS transmission UE 730 may transmit a PUSCH to the base station in the configured transmission beam direction. However, without being limited thereto, according to an embodiment, when channel reciprocity is considered, the CLI-RS measurement UE 720 may transmit the PUSCH to the base station in the configured reception beam direction, and the CLI-RS transmission UE 730 may receive the PDSCH transmitted from the base station in the configured transmission beam direction. According to various embodiments of the disclosure, a signal transmitted and received by each UE will be referred to as an FD PUSCH or an FD PDSCH, but is not limited thereto, and the signal may include various signals (a sounding reference signal (SRS), a physical uplink control channel (PUCCH), a physical downlink control channel (PDCCH), and a de-modulation reference signal (DMRS)) in addition to a data channel.

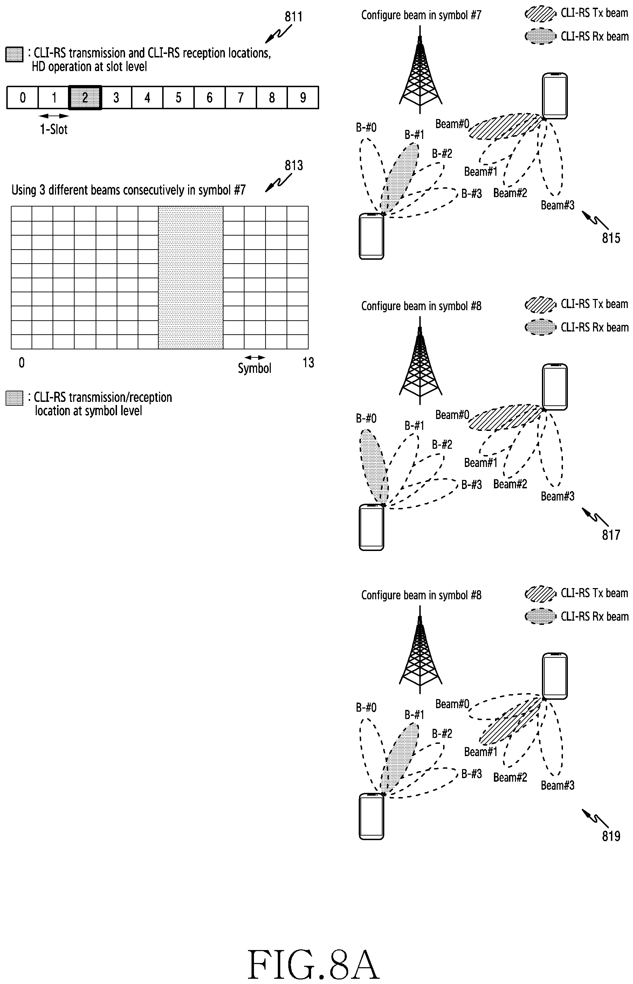

FIG. 8A to FIG. 8E illustrate various examples of resource allocation for transmission and reception of a base station according to various embodiments of the disclosure. Specifically, referring to FIG. 8A to FIG. 8E, embodiments of resource allocation for a base station to configure CLI measurement to a CLI-RS measurement UE and a CLI-RS transmission UE are illustrated. Hereinafter, procedures described in FIG. 8A to FIG. 8E may be specific details for one (step 705) of the steps described in FIG. 7, and the procedures described via FIG. 8A to FIG. 8E may refer to independent procedures, or refer to at least one of the procedures as one step among all the steps of FIG. 7. In addition, embodiments of resource allocation described via FIG. 8A to FIG. 8E may be used in combination with each other.

The base station may allocate resources for reception or transmission, to the CLI-RS measurement UE and the CLI-RS transmission UE, respectively. According to an embodiment, information on the resources allocated by the base station may include information on a CLI-RS identifier (ID) mapped or grouped for each resource. According to an embodiment, the resources allocated by the base station to each UE may be mapped or grouped to one or more beams. According to an embodiment, beam information may be explicitly designated in the resources allocated by the base station to each UE. That is, at least one beam may be mapped or grouped in the resources for CLI-RS reception or transmission, which are allocated by the base station to the CLI-RS measurement or transmission UE, but the disclosure is not limited thereto. According to various embodiments of the disclosure, the base station may indicate only a CLI-RS resource identifier (i.e., CLI-RS ID) for the allocated resources, and the at least one beam to be mapped or grouped may be determined by the UE.

Referring to FIG. 8A to FIG. 8E, various embodiments of configurations for resources allocated by the base station to at least one UE, and beams mapped or grouped to the resources are illustrated. According to an embodiment, the resources allocated by the base station may include resources for CLI-RS transmission of the CLI-RS transmission UE as well as resources for CLI-RS reception of the CLI-RS reception UE. Referring to FIG. 8A to FIG. 8E, but not limited thereto, according to various embodiments of the disclosure, CLI-RS IDs may be mapped or grouped in the respective resources allocated by the base station, but not all resources allocated by the base station may have mapped or grouped beams for CLI-RS transmission and reception.

Referring to FIG. 8A, according to an embodiment, the base station may allocate, as resources for CLI-RS, three consecutive symbols in one slot. According to an embodiment, resource allocation between the base station and each UE may be performed in a half-duplex (HD) system. For example, the base station may map or group CLI-RS IDs with respect to symbols #7, #8, and #9 of slot #2 among slots at a slot level 811, and allocate the CLI-RS IDs as resources for CLI-RS transmission and reception. In addition, in symbols #7, #8, and #9 of slot #2, CLI-RS transmission and reception beam pairs may be mapped or grouped, respectively. That is, different beams may be mapped or grouped 813 to three consecutive resource areas starting from symbol #7. In symbol #7, beam#0 among CLI-RS transmission beams and B-#1 among CLI-RS reception beams may be mapped or grouped 815. In symbol #8, beam#0 among the CLI-RS transmission beams and B-#0 among the CLI-RS reception beams may be mapped or grouped 817. In symbol #9, beam#1 among the CLI-RS transmission beams and B-#1 among the CLI-RS reception beams may be mapped or grouped 819.

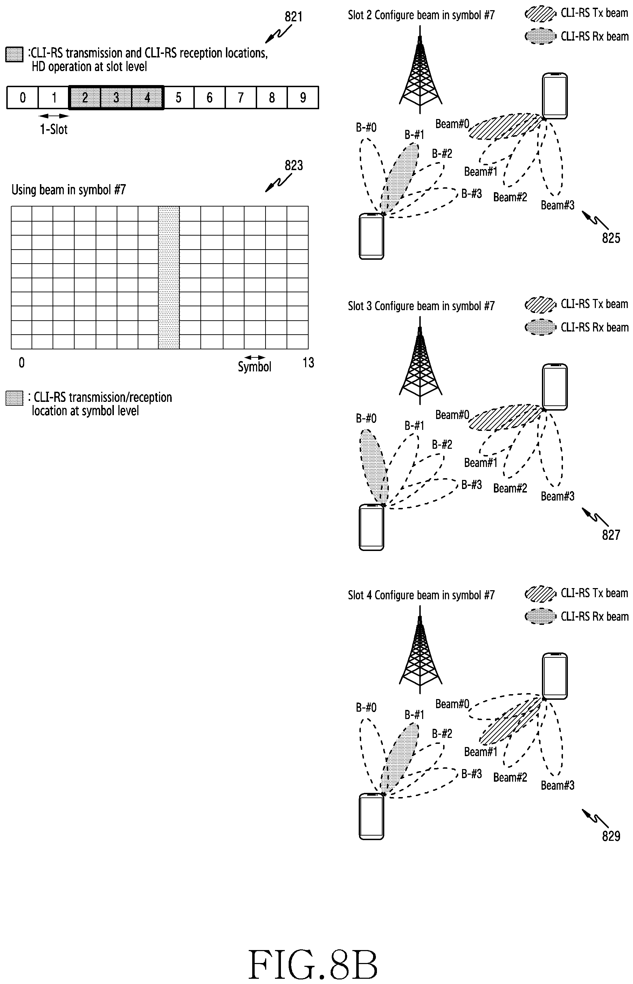

Referring to FIG. 8B, according to an embodiment, the base station may allocate, as resources for CLI-RS, symbols at the same location within consecutive slots. According to an embodiment, resource allocation between the base station and each UE may be performed in the half-duplex (HD) system. For example, the base station may map or group CLI-RS IDs with respect to symbol #7 of slots #2, #3, and #4 among slots at a slot level 821, and allocate the CLI-RS IDs as resources for CLI-RS transmission and reception. In addition, CLI-RS transmission and reception beam pairs may be mapped or grouped 823 in symbol #7 resource areas of slots #2, #3, and #4, respectively. In symbol #7 of slot #2, beam#0 among CLI-RS transmission beams and B-#1 among CLI-RS reception beams may be mapped or grouped 825. In symbol #7 of slot #3, beam#0 among the CLI-RS transmission beams and B-#0 among the CLI-RS reception beams may be mapped or grouped 827. In symbol #7 of slot #4, beam#1 among the CLI-RS transmission beams and B-#1 among the CLI-RS reception beams may be mapped or grouped 829.

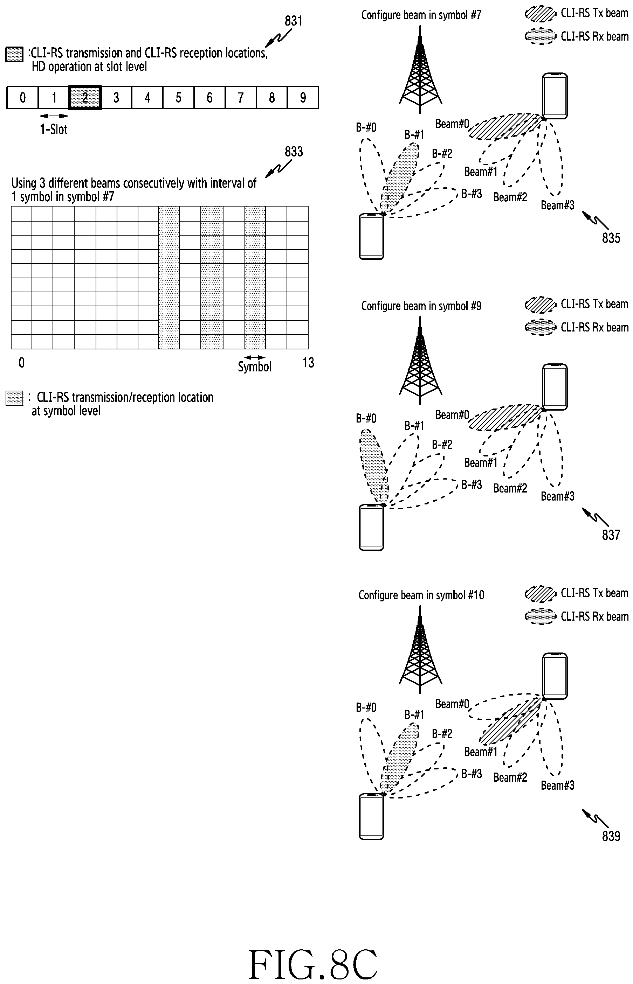

Referring to FIG. 8C, according to an embodiment, the base station may allocate, as resources for CLI-RS, three symbols having a constant interval within one slot. According to an embodiment, resource allocation between the base station and each UE may be performed in the half-duplex (HD) system. For example, the base station may map or group CLI-RS IDs with respect to symbols #7, #9, and #11 of slot #2 among slots at a slot level 831, and allocate the CLI-RS IDs as resources for CLI-RS transmission and reception. In addition, in symbols #7, #9, and #11 of slot #2, CLI-RS transmission and reception beam pairs may be mapped or grouped, respectively. That is, different beams may be mapped or grouped 833 to three resource areas having an interval of 1 symbol starting from symbol #7. In symbol #7, beam#0 among CLI-RS transmission beams and B-#1 among CLI-RS reception beams may be mapped or grouped 835. In symbol #9, beam#0 among the CLI-RS transmission beams and B-#0 among the CLI-RS reception beams may be mapped or grouped 837. In symbol #11, beam#1 among the CLI-RS transmission beams and B-#1 among the CLI-RS reception beams may be mapped or grouped 839.

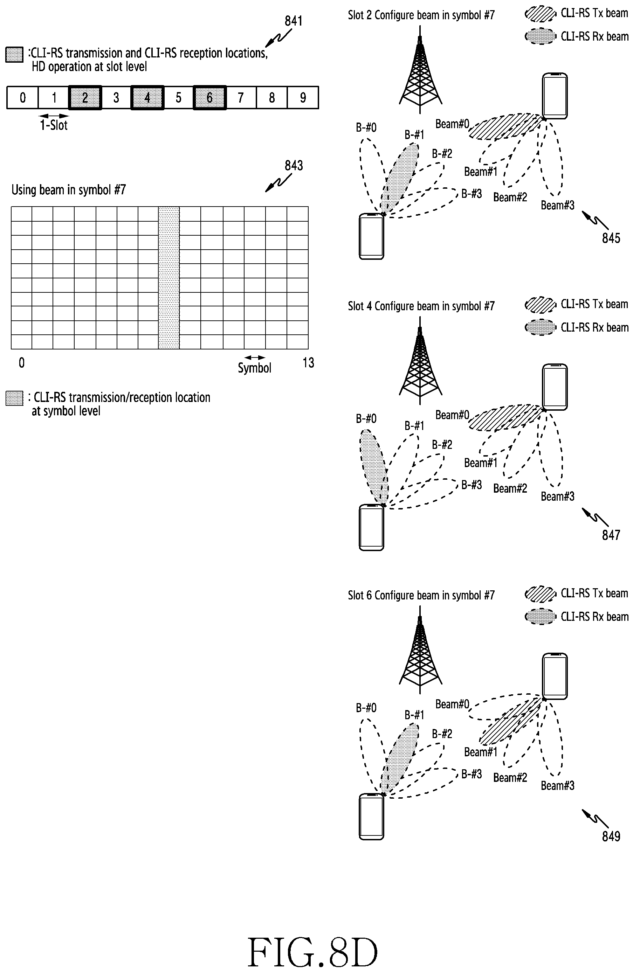

Referring to FIG. 8D, according to an embodiment, the base station may allocate, as resources for CLI-RS, symbols at the same location within slots having a constant interval. According to an embodiment, resource allocation between the base station and each UE may be performed in the half-duplex (HD) system. For example, the base station may map or group CLI-RS IDs with respect to symbol #7 of slots #2, #4, and #6 among slots at a slot level 841, and allocate the CLI-RS IDs as resources for CLI-RS transmission and reception. In addition, CLI-RS transmission and reception beam pairs may be mapped or grouped 843 in symbol #7 resource areas of slots #2, #4, and #6, respectively. In symbol #7 of slot #2, beam#0 among CLI-RS transmission beams and B-#1 among CLI-RS reception beams may be mapped or grouped 845. In symbol #7 of slot #4, beam#0 among the CLI-RS transmission beams and B-#0 among the CLI-RS reception beams may be mapped or grouped 847. In symbol #7 of slot #6, beam#1 among the CLI-RS transmission beams and B-#1 among the CLI-RS reception beams may be mapped or grouped 849.

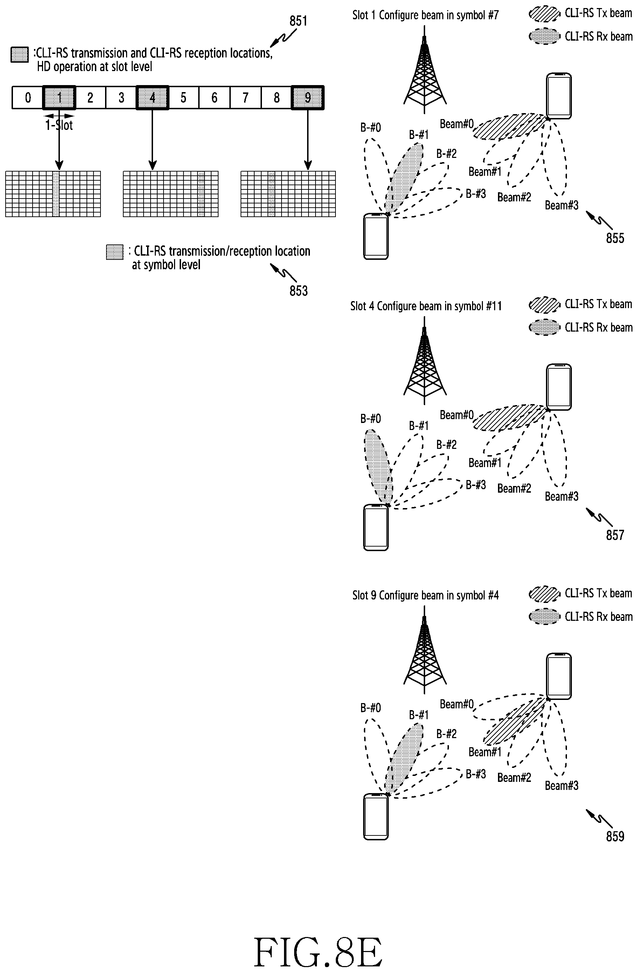

Referring to FIG. 8E, according to an embodiment, the base station may allocate, as resources for CLI-RS, any symbol in any slot. According to an embodiment, resource allocation between the base station and each UE may be performed in the half-duplex (HD) system. For example, the base station may map or group CLI-RS IDs with respect to symbol #7 of slot #1, symbol #11 of slot #4, and symbol #4 of slot #9 among slots at a slot level 851, and allocate the CLI-RS IDs as resources for CLI-RS transmission and reception. In addition, CLI-RS transmission and reception beam pairs may be mapped or grouped 853 in resource areas of symbol #7 of slot #1, symbol #11 of slot #4, and symbol #4 of slot #9, respectively. In symbol #7 of slot #1, beam#0 among CLI-RS transmission beams and B-#1 among CLI-RS reception beams may be mapped or grouped 855. In symbol #11 of slot #4, beam#0 among the CLI-RS transmission beams and B-#0 among the CLI-RS reception beams may be mapped or grouped 857. In symbol #4 of slot #9, beam#1 among the CLI-RS transmission beams and B-#1 among the CLI-RS reception beams may be mapped or grouped 859.

According to various embodiments of the disclosure, each UE may determine an allocated resource and a beam corresponding thereto, and perform CLI-RS transmission and reception operation based on the determined beam. The base station having received a CLI-RS measurement report via CLI-RS transmission and reception may determine at least one optimal beam, and schedule a data channel for each UE, based on the at least one optimal beam. The scheduling performed by the base station may include a CLI-RS ID corresponding to the at least one optimal beam. Each UE scheduled for data channel transmission and reception may select a data channel transmission/reception beam based on the received CLI-RS ID. According to an embodiment, FIG. 8A to FIG. 8E illustrate a case where each resource area explicitly indicates a beam. However, the disclosure is not limited thereto, and a resource area allocated by the base station to each UE may include only a CLI-RS ID and may not explicitly indicate a beam. If a beam is not explicitly indicated in each resource area, the UE may determine, via self-determination or various methods, a beam corresponding to the allocated resources and to the CLI-RS ID included in the resources, even without an explicit indication of the base station. According to an embodiment, FIG. 8A to FIG. 8E illustrate a case where the base station allocates multiple resource areas to each UE. However, the disclosure is not limited thereto, and the base station may allocate a single resource area to each UE. If at least one beam identified based on the allocated resource is a single beam, each UE may perform CLI-RS transmission and reception and CLI-RS measurement via a single beam, and the base station having received a CLI-RS measurement report from a CLI-RS measurement UE may determine a CLI-RS transmission UE having an optimal interference value in relation to the CLI-RS measurement UE, and perform co-scheduling of an FD data channel signal for these UEs.

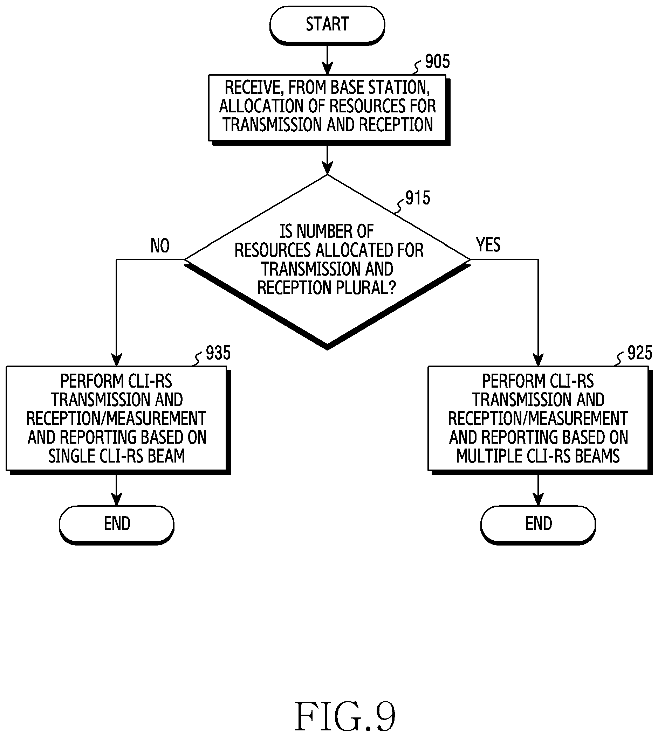

FIG. 9 illustrates a UE operation flow of receiving, from a base station, an allocation of resources for transmission and reception, so as to measure and report interference in the FD system according to various embodiments of the disclosure. Hereinafter, procedures described in FIG. 9 may be specific details for one (step 705) of the steps described in FIG. 7, and the procedures described via FIG. 9 may refer to independent procedures, or refer to at least one of the procedures as one step among all the steps of FIG. 7. In addition, a UE in the following may include a CLI-RS transmission UE that determines a CLI-RS transmission beam to transmit a CLI-RS, and a CLI-RS reception UE that determines a CLI-RS reception beam to receive a CLI-RS.

In step 905, a UE may receive, from a base station, an allocation of at least one resource for CLI-RS transmission and reception. Specifically, if the UE is a CLI-RS transmission UE, the UE may receive, from the base station, an allocation of resources for signal transmission, or if the UE is a CLI-RS reception UE, the UE may receive, from the base station, an allocation of resources for signal reception. According to an embodiment, information on the resources allocated by the base station may include information on a CLI-RS ID mapped or grouped for each resource. According to an embodiment, the resources allocated by the base station to each UE may be mapped or grouped to one or more beams. According to an embodiment, beam information may be explicitly designated in the resources allocated by the base station to each UE. That is, at least one beam may be mapped or grouped in the resources for CLI-RS reception or transmission, which are allocated by the base station to the CLI-RS measurement or transmission UE, but the disclosure is not limited thereto. According to various embodiments of the disclosure, the base station may indicate only a CLI-RS resource identifier (ID) for the allocated resources, and the at least one beam to be mapped or grouped may be determined by the UE.

In step 915, the UE may identify at least one CLI-RS transmission/reception beam among multiple available beams, based on the resources allocated from the base station. Specifically, the CLI-RS transmission UE may identify at least one CLI-RS transmission beam among the multiple available beams, based on the resources for CLI-RS transmission allocated from the base station. The CLI-RS reception UE may identify at least one CLI-RS reception beam among multiple available beams, based on the resources for CLI-RS reception allocated from the base station. According to an embodiment, the base station may allocate, to the UE, at least one resource for CLI-RS transmission and reception, and the UE may identify the number of CLI-RS transmission/reception beams among the multiple available beams in the allocated resources for transmission and reception.

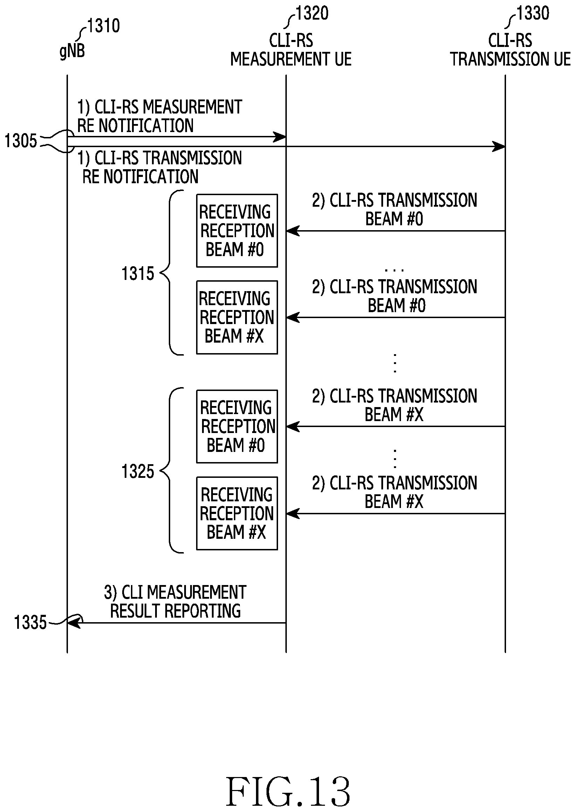

If there are multiple CLI-RS transmission/reception beams identified by the UE, the UE may proceed to step 925 to perform CLI-RS transmission and reception, measurement, and reporting based on the multiple CLI-RS beams. Performing operations based on the multiple CLI-RS beams by the UE is described in detail in FIG. 13 to FIG. 16. Specifically, the UE may perform CLI-RS transmission and reception via the allocated resources for CLI-RS transmission and reception and multiple beams determined based on the resources. The CLI-RS measurement UE may perform CLI-RS measurement for the respective beams on which CLI-RS transmission and reception are performed, and report the same to the base station via at least one of the various reporting methods disclosed in FIG. 7. According to an embodiment, performing of the CLI-RS measurement for multiple beam pairs may include at least one of beam sweeping according to CLI-RS transmission beam fixation or beam sweeping according to CLI-RS reception beam fixation. According to an embodiment, the base station having received the measurement report may determine an optimal beam pair and transmit, to the UE, scheduling information including an index and a CLI-RS ID for the optimal beam pair. According to an embodiment, the base station having received the measurement report may determine a UE pair for scheduling, based on a CLI value of a CLI-RS transmission UE having a lowest interference value with respect to the CLI-RS measurement UE.

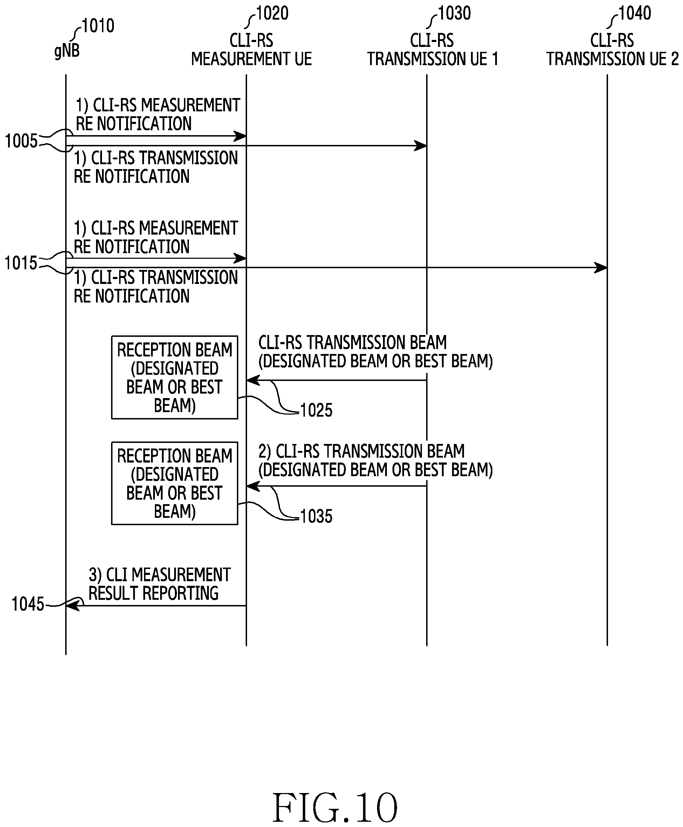

If there is a single CLI-RS transmission/reception beam identified by the UE, the UE may proceed to step 935 to perform CLI-RS transmission and reception, measurement, and reporting based on the single CLI-RS beams. Performing operations based on the single CLI-RS beam by the UE is described in detail in FIG. 10 to FIG. 12. Specifically, the UE may perform CLI-RS transmission or reception via the allocated resources for CLI-RS transmission and reception and a single beam determined based on the resources. The CLI-RS measurement UE may perform CLI-RS measurement on the beam for receiving CLI-RSs transmitted from one or more CLI-RS transmission UEs, and may report the same to the base station via at least one of the various reporting methods disclosed in FIG. 7. According to an embodiment, the base station having received the measurement report may determine the CLI-RS transmission UE and CLI-RS measurement UE including an optimal beam pair, and transmit scheduling information including an index and a CLI-RS ID for the optimal beam pair to the CLI-RS measurement UE or the determined CLI-RS transmission UE.

Hereinafter, FIG. 10 to FIG. 12 illustrate operations related to CLI-RS measurement and reporting by single CLI-RS beam transmission and reception. A series of procedures described in FIG. 10 to FIG. 12 may be specific details for a series of procedures (step 705 to step 725) among the steps described in FIG. 7, and the procedures described via FIG. 10 to FIG. 12 may refer to independent procedures, or refer to at least one of the procedures as one step among all the steps of FIG. 7.

FIG. 10 illustrates a signal flow for interference measurement and reporting based on a single beam according to various embodiments of the disclosure. Specifically, referring to FIG. 10, illustrated is a signal flow for CLI-RS measurement and reporting between a base station 1010 and at least one UE including a CLI-RS measurement UE 1020 and at least one CLI-RS transmission UE 1030 and 1040.

In step 1005, the base station 1010 may configure CLI measurement for the CLI-RS measurement UE 1020 and a first CLI-RS transmission UE 1030. Specifically, the base station 1010 may allocate resources for CLI-RS reception or transmission, to the CLI-RS measurement UE 1020 and the first CLI-RS transmission UE 1030, respectively. According to an embodiment, information on the resources allocated by the base station 1010 may include information on a CLI-RS ID (or index) mapped or grouped for each resource.

According to an embodiment, the resources allocated by the base station to each UE may be mapped or grouped to one beam. In addition, according to an embodiment, beam information may be explicitly designated in the resources allocated by the base station 1010 to each UE. That is, a single beam may be mapped or grouped in the resources for CLI-RS reception or transmission allocated by the base station 1010 to the CLI-RS measurement UE 1020 or the first CLI-RS transmission UE 1030. According to an embodiment, beam information may not be designated in the resources allocated by the base station 1010 to each UE. That is, the base station may indicate only a CLI-RS resource identifier (ID) for the allocated resources, and at least one beam to be mapped or grouped may be determined by the UE. For example, if a beam is not explicitly indicated in each resource area, each UE may determine, via self-determination or various methods, a beam corresponding to the allocated resources and to the CLI-RS ID included in the resources, even without an explicit indication of the base station.

In step 1015, the base station 1010 may configure CLI measurement for the CLI-RS measurement UE 1020 and a second CLI-RS transmission UE 1040. Specifically, the base station 1010 may allocate resources for reception or transmission, to the CLI-RS measurement UE 1020 and the second CLI-RS transmission UE 1040, respectively. According to an embodiment, information on the CLI-RS beam or information on the resources allocated by the base station to each UE in step 1015 may be different from information on the CLI-RS beam or information on the resources allocated by the base station to each UE in step 1005. According to an embodiment, information on the resources allocated by the base station 1010 may include information on a CLI-RS ID (or index) mapped or grouped for each resource.

According to an embodiment, the resources allocated by the base station to each UE may be mapped or grouped to one beam. According to an embodiment, beam information may be explicitly designated in the resources allocated by the base station 1010 to each UE. That is, a single beam may be mapped or grouped in the resources for CLI-RS reception or transmission allocated by the base station 1010 to the CLI-RS measurement UE 1020 or the second CLI-RS transmission UE 1040. According to an embodiment, beam information may not be designated in the resources allocated by the base station 1010 to each UE. That is, the base station may indicate only a CLI-RS resource identifier (ID) for the allocated resources, and at least one beam to be mapped or grouped may be determined by the UE. For example, if a beam is not explicitly indicated in each resource area, each UE may determine, via self-determination or various methods, a beam corresponding to the allocated resources and to the CLI-RS ID included in the resources, even without an explicit indication of the base station.

In step 1025, the first CLI-RS transmission UE 1030 may transmit a CLI-RS to the CLI-RS measurement UE 1020 via the CLI-RS transmission beam determined based on the allocated resources for CLI-RS transmission. According to an embodiment, the CLI-RS transmission beam determined by the first CLI-RS transmission UE 1030 or the CLI-RS reception beam determined by the CLI-RS measurement UE 1020 may include a single beam. According to an embodiment, the CLI-RS transmission beam determined by the first CLI-RS transmission UE 1030 or the CLI-RS reception beam determined by the CLI-RS measurement UE 1020 may each include a beam indicated by the base station 1010. According to an embodiment, the CLI-RS transmission beam determined by the first CLI-RS transmission UE 1030 or the CLI-RS reception beam determined by the CLI-RS measurement UE 1020 may each include a beam determined by UE self-determination (e.g., best effort), etc. The first CLI-RS measurement UE 1030 may transmit the CLI-RS to the CLI-RS measurement UE 1020 via the CLI-RS transmission beam determined based on the allocated resources for CLI-RS transmission. The CLI-RS measurement UE 1020 may receive the CLI-RS from the first CLI-RS transmission UE 1030 via the CLI-RS reception beam determined based on the allocated resources for CLI-RS reception. According to an embodiment, the CLI-RS measurement UE 1020 may perform CLI measurement based on the CLI-RSs received from the first CLI-RS transmission UE 1030 and the second CLI-RS transmission UE 1040.

In step 1035, the second CLI-RS transmission UE 1040 may transmit a CLI-RS to the CLI-RS measurement UE 1020 via the CLI-RS transmission beam determined based on the allocated resources for CLI-RS transmission. According to an embodiment, the CLI-RS transmission beam determined by the second CLI-RS transmission UE 1040 or the CLI-RS reception beam determined by the CLI-RS measurement UE 1020 may include a single beam. According to an embodiment, the CLI-RS transmission beam determined by the second CLI-RS transmission UE 1040 or the CLI-RS reception beam determined by the CLI-RS measurement UE 1020 may each include a beam indicated by the base station 1010. According to an embodiment, the CLI-RS transmission beam determined by the second CLI-RS transmission UE 1040 or the CLI-RS reception beam determined by the CLI-RS measurement UE 1020 may each include a beam determined by UE self-determination (e.g., best effort), etc. The second CLI-RS measurement UE 1040 may transmit the CLI-RS to the CLI-RS measurement UE 1020 via the CLI-RS transmission beam determined based on the allocated resources for CLI-RS transmission. The CLI-RS measurement UE 1020 may receive the CLI-RS from the second CLI-RS transmission UE 1040 via the CLI-RS reception beam determined based on the allocated resources for CLI-RS reception. According to an embodiment, the CLI-RS measurement UE 1020 may perform CLI measurement based on the CLI-RSs received from the first CLI-RS transmission UE 1030 and the second CLI-RS transmission UE 1040.

In step 1045, the CLI-RS measurement UE 1020 may report measured CLI information to the base station 1010. According to various embodiments of the disclosure, the CLI-RS measurement UE 1020 may report the CLI-RS measurement information to the base station 1010 by various methods. According to an embodiment, the CLI-RS measurement UE 1020 may report the CLI-RS measurement information to the base station 1010 by using CLI-RS reporting resources allocated from the base station 1010. Hereinafter, reporting methods that the CLI-RS measurement UE 1020 may determine are described.

Method 1) Full CLI report: The CLI-RS measurement UE 1020 may report, to the base station 1010, all information on at least one beam pair used for CLI-RS transmission and reception.

Method 2) Smallest CLI report: The CLI-RS measurement UE 1020 may report, to the base station 1010, a CLI-RS index indicating at least one beam pair having a smallest interference value among measured CLI values. The index of the at least one beam pair having the smallest interference value, which is reported by the CLI-RS measurement UE 1020, may be an index of at least one beam pair based on the CLI-RS received from at least one CLI-RS transmission UE. According to an embodiment, information reported by the CLI-RS measurement UE 1020 may be an index for at least one beam pair including a beam pair having an N-th lowest interference value as well as an index for a beam pair having a lowest interference value. According to an embodiment, an N value may be preconfigured by the base station.

Method 3) CLI average report: The CLI-RS measurement UE 1020 may calculate an average of interference values of all at least one beam pair used for CLI-RS transmission and reception, and report information on an average value to the base station 1010.

Method 4) Threshold value-compared CLI report: The CLI-RS measurement UE 1020 may report, based on a threshold value to the base station 1010, interference values for at least one beam pair used for CLI-RS transmission and reception. Specifically, according to an embodiment, the CLI-RS measurement UE 1020 may report, to the base station 1010, information on one or more beam pairs having interference values equal to or smaller than the threshold value and index information thereof. According to an embodiment, the threshold value may be preconfigured by the base station 1010, or may be predefined in the UE itself.

Method 5) Blacklist report: The CLI-RS measurement UE 1020 may determine, as a blacklist, an index for a part of at least one beam pair used for CLI-RS transmission and reception, and report the blacklist. Specifically, the CLI-RS measurement UE 1020 may determine the blacklist to be one or more beam pairs having high interference values and report the blacklist to the base station 1010, and the base station 1010 may perform scheduling for data channel transmission and reception, except for the one or more beam pairs included in the blacklist. According to an embodiment, the CLI-RS measurement UE 1020 may determine, based on a specific reference interference value, the blacklist to be one or more beam pairs having interference values equal to or greater than the reference interference value, and the reference interference value may be configured by the base station or may be predefined in the UE itself. However, the method of determining a blacklist according to various embodiments of the disclosure is not limited thereto, and may include various methods, such as determining a blacklist to be one or more beam pairs in which a specific event has occurred.

As described above, the CLI-RS measurement UE 1020 may determine at least one of method 1) to method 5) based on various reasons, such as feedback overhead, and may report the CLI-RS measurement information to the base station 1010 via the determined method. However, according to various embodiments of the disclosure, the CLI-RS measurement information is not limited to being reported according to an individual method, and the CLI-RS measurement UE 1020 may report the CLI-RS measurement information to the base station 1010 via at least one of method 1) to method 5) or a combination thereof.

Although not illustrated in FIG. 10, the base station 1010 may determine a UE pair having a smallest CLI-RS, based on the reported CLI-RS measurement information. The base station 1010 may determine a pair of one CLI-RS measurement UE 1020 and one CLI-RS transmission UE 1030 or 1040, which has a smallest interference value, based on CLI values between the CLI-RS measurement UE 1020 and at least one CLI-RS transmission UE 1030 and 1040. To determine this, the base station 1010 may use CLI-RS measurements between one CLI-RS measurement UE 1020 and multiple CLI-RS transmission UEs 1030 and 1040, respectively. Alternatively, but not limited thereto, the base station 1010 may use CLI-RS measurements between one CLI-RS transmission UE and multiple CLI-RS measurement UEs, respectively.

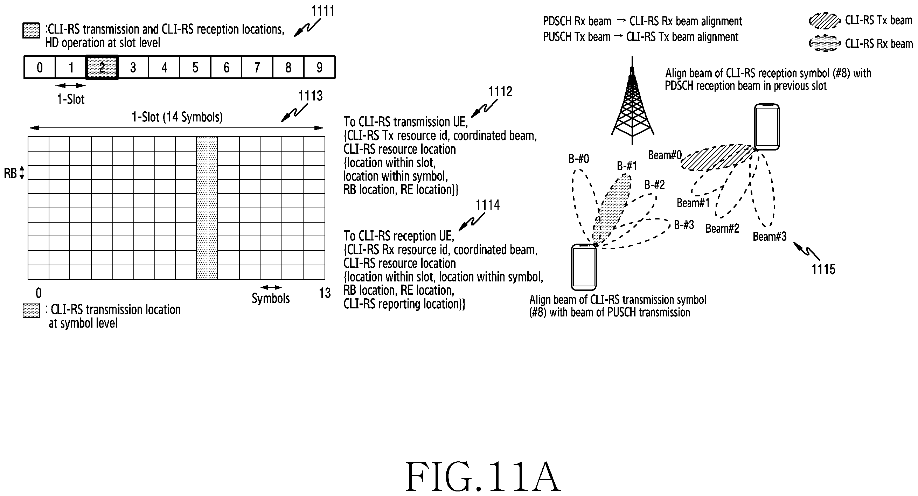

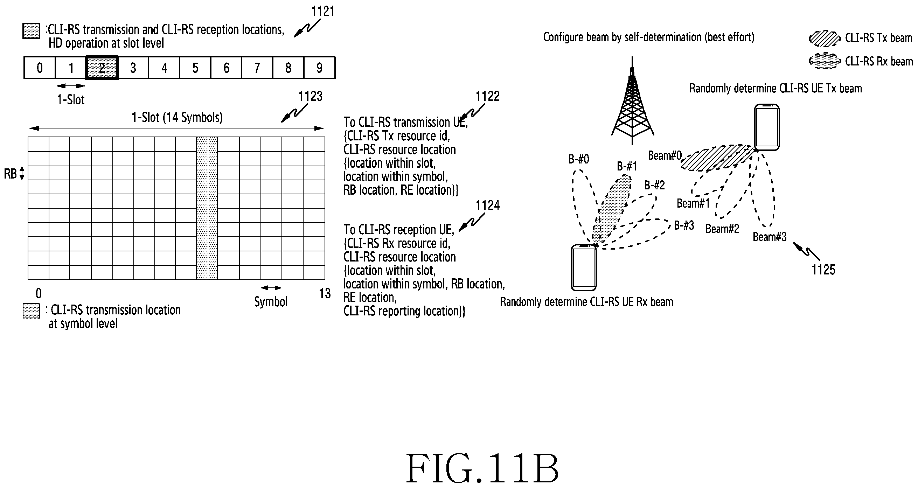

FIG. 11A and FIG. 11B illustrate examples of single-beam determination for interference measurement according to various embodiments of the disclosure. Specifically, referring to FIG. 11A and FIG. 11B, illustrated is an example in which a CLI-RS measurement UE and a CLI-RS transmission UE determine a CLI-RS reception beam and a CLI-RS transmission beam to be a single beam, respectively, based on resource allocation from a base station.

According to various embodiments of the disclosure, the base station may allocate resources for reception and transmission, to the CLI-RS measurement UE and the CLI-RS transmission UE, respectively. According to an embodiment, information on the resources allocated by the base station may include information on a CLI-RS ID (or index) mapped or grouped for each resource. According to an embodiment, the resources allocated by the base station to each UE may be mapped or grouped to one beam.

According to an embodiment of the disclosure, the resources allocated by the base station to each UE may be mapped (or including grouping) to one beam. According to an embodiment, one resource allocated by the base station to each UE may include information (e.g., a resource ID and a resource location) on a CLI-RS beam mapped to one resource. The CLI-RS beam mapped to one resource allocated by the base station may include a coordinated beam. A coordinated beam may include a PDSCH beam or a PUSCH beam, which corresponds to the location (e.g., slot or symbol) of the resources allocated by the base station to each UE, a beam used when each UE receives a synchronization signal block (SSB), or a beam used when each UE receives a channel state information (CSI)-RS. That is, the base station may transmit, to the CLI-RS transmission UE, at least one of a CLI-RS transmission resource ID, information on a coordinated beam, or information on a CLI-RS resource location (e.g., a location within a slot, a location within a symbol, a resource block (RB) location, or a resource element (RE) location). The base station may transmit, to the CLI-RS measurement UE, at least one of a CLI-RS reception resource ID, information on a coordinated beam, or information on a CLI-RS resource location (e.g., a location within a slot, a location within a symbol, a resource block (RB) location, or a resource element (RE) location).

According to an embodiment, referring to FIG. 11A, when the base station allocates a resource including symbol #8 of slot #2 to the CLI-RS transmission UE and the CLI-RS measurement UE, information including the CLI-RS transmission/reception resource ID and information on the coordinated beam may be configured together for each UE. Each UE having received the resource and coordinated beam information from the base station may perform CLI-RS beam coordination 1115 based on the received resource and coordinated beam information. For example, the CLI-RS transmission UE may receive resource allocation and coordinated beam information from the base station, and the coordinated beam information may include information (e.g., information on a PUSCH transmission beam on another symbol in the same slot) on a beam at a PUSCH transmission location (symbol) associated with a CLI-RS resource location (symbol). Accordingly, the CLI-RS transmission UE may determine beam#0 as a CLI-RS transmission beam, based on the received information. For example, the CLI-RS measurement UE may receive resource allocation and coordinated beam information from the base station, and the coordinated beam information may include information (e.g., information on a PDSCH reception beam in a previous slot) on a beam at a PDSCH reception location (slot) associated with a CLI-RS resource location (slot). Accordingly, the CLI-RS measurement UE may determine B-#1 as a CLI-RS reception beam, based on the received information. According to various embodiments of the disclosure, the CLI-RS measurement UE and the CLI-RS transmission UE may perform CLI-RS transmission and reception based on the determined beams.

According to an embodiment of the disclosure, the resources allocated by the base station to each UE may be mapped (or including grouping) to one beam. According to an embodiment, when at least one resource allocated by the base station to each UE does not include information on a CLI-RS beam mapped to the at least one resource, each UE may determine a CLI-RS beam by self-determination (e.g., best effort). According to an embodiment, the CLI-RS beam that each UE determines based on the resources allocated from the base station may be a single beam. According to an embodiment, the UE may determine the CLI-RS beam on its own based on a resource area allocated from the base station. According to various embodiments, in order to determine the CLI-RS beam on its own, the UE may determine the CLI-RS beam based on at least one of a PDSCH beam or PUSCH beam associated with a CLI-RS resource location, a beam used when receiving an SSB, a beam used when receiving a CSI-RS, or a beam used when transmitting an SRS. According to an embodiment, the PDSCH beam or PUSCH beam associated with the CLI-RS resource location may include a PDSCH beam or PUSCH beam in the slot (or previous slot) of the allocated CLI-RS resources. According to an embodiment, the UE may randomly determine the CLI-RS beam based on the allocated CLI-RS resources. The aforementioned scheme and criteria for the UE to determine the CLI-RS beam on its own are not limited thereto, and may be pre-defined or preconfigured by the base station according to various embodiments of the disclosure.

According to an embodiment, referring to FIG. 11B, when the base station allocates a resource including symbol #8 of slot #2 to the CLI-RS transmission UE and the CLI-RS measurement UE, a CLI-RS transmission/reception resource ID (e.g., including a CLI-RS resource location) may be configured for each UE. Each UE having received the CLI-RS resource location from the base station may determine 1125 a CLI-RS beam based on the received resource information. For example, the CLI-RS transmission UE may receive information on resource allocation from the base station, and may determine beam#0 as the CLI-RS transmission beam based on the aforementioned UE self-determination. For example, the CLI-RS measurement UE may receive information on resource allocation from the base station, and may determine B-#1 as the CLI-RS reception beam based on the aforementioned UE self-determination. According to various embodiments of the disclosure, the CLI-RS measurement UE and the CLI-RS transmission UE may perform CLI-RS transmission and reception based on the determined beams.

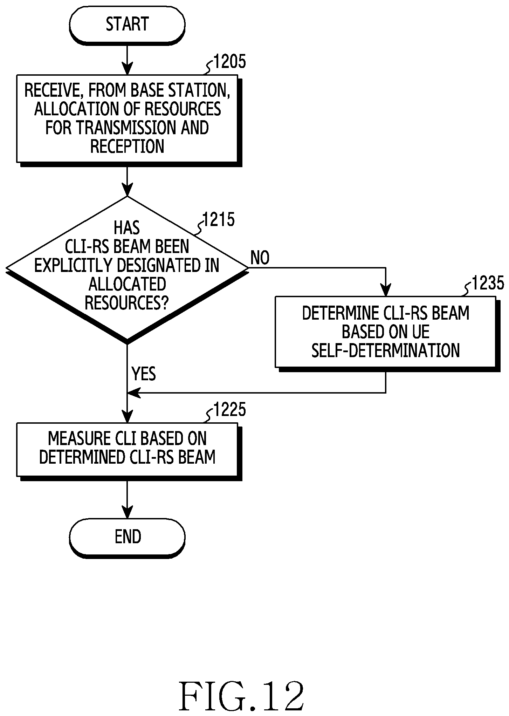

FIG. 12 illustrates a UE operation flow of interference measurement and reporting based on a single beam according to various embodiments of the disclosure. Specifically, referring to FIG. 12, illustrated is an operation flow of a CLI-RS measurement UE or a CLI-RS transmission UE for determining a CLI-RS beam based on resources allocated from a base station. In addition, a UE in the following may include a CLI-RS transmission UE that determines a CLI-RS transmission beam to transmit a CLI-RS, and a CLI-RS reception UE that determines a CLI-RS reception beam to receive a CLI-RS.

In step 1205, a UE may receive, from a base station, an allocation of resources for CLI-RS transmission and reception. Specifically, if the UE is a CLI-RS transmission UE, the UE may receive, from the base station, an allocation of resources for signal transmission, or if the UE is a CLI-RS measurement (e.g., reception) UE, the UE may receive, from the base station, an allocation of resources for signal reception. According to an embodiment, information on the resources allocated by the base station may include information on a CLI-RS ID mapped or grouped for each resource. According to an embodiment, the resources allocated by the base station to each UE may be mapped or grouped to one or more beams. According to an embodiment, beam information may be explicitly designated in the resources allocated by the base station to each UE. That is, at least one beam may be mapped or grouped in the resources for CLI-RS reception or transmission, which are allocated by the base station to the CLI-RS measurement or transmission UE, but the disclosure is not limited thereto. According to various embodiments of the disclosure, the base station may indicate only a CLI-RS resource identifier (ID) for the allocated resources, and the at least one beam to be mapped or grouped may be determined by the UE.

In step 1205, the UE may determine whether a beam for CLI-RS transmission is explicitly designated in the resources allocated from the base station. According to an embodiment, although not illustrated in FIG. 12, step 915 of FIG. 9 may be performed before or after step 1215. For example, the UE may identify, prior to CLI-RS beam determination, at least one CLI-RS transmission/reception beam among multiple available beams, based on the resources for transmission and reception, which are allocated from the base station.

According to an embodiment of the disclosure, in step 1215, if a CLI-RS beam is explicitly designated in the resources allocated to the UE from the base station, step 1225 is performed. According to an embodiment, the resources allocated by the base station to each UE may be mapped (or including grouping) to one beam. According to an embodiment, one resource allocated by the base station to each UE may include information (e.g., a resource ID and a resource location) on a CLI-RS beam mapped to one resource. The CLI-RS beam mapped to one resource allocated by the base station may include a coordinated beam. A coordinated beam may include a PDSCH beam or a PUSCH beam, which corresponds to the location (e.g., slot or symbol) of the resources allocated by the base station to each UE, a beam used when each UE receives a synchronization signal block (SSB), or a beam used when each UE receives a channel state information (CSI)-RS. That is, the base station may transmit, to the CLI-RS transmission UE, at least one of a CLI-RS transmission resource ID, information on a coordinated beam, or information on a CLI-RS resource location (e.g., a location within a slot, a location within a symbol, a resource block (RB) location, or a resource element (RE) location). The base station may transmit, to the CLI-RS measurement UE, at least one of a CLI-RS reception resource ID, information on a coordinated beam, or information on a CLI-RS resource location (e.g., a location within a slot, a location within a symbol, a resource block (RB) location, or a resource element (RE) location). According to an embodiment, each UE having received the resource and coordinated beam information from the base station may determine a CLI-RS beam, based on the received resource and coordinated beam information.

In step 1225, the CLI-RS measurement UE and the CLI-RS transmission UE may perform CLI-RS transmission and reception based on the determined beams. Although not illustrated in FIG. 12, in step 1225, the CLI-RS transmission UE may transmit a CLI-RS to the CLI-RS measurement UE, based on the determined transmission beam. In step 1225, the CLI-RS measurement UE may receive the CLI-RS from the CLI-RS transmission UE and measure CLI based on the received CLI-RS.

According to an embodiment of the disclosure, in step 1215, if a CLI-RS beam is not explicitly included in the resources allocated to the UE from the base station, step 1235 is performed. According to an embodiment, the resources allocated by the base station to each UE may be mapped (or including grouping) to one beam. According to an embodiment, when at least one resource allocated by the base station to each UE does not include information on a CLI-RS beam mapped to the at least one resource, each UE may determine a CLI-RS beam by self-determination (e.g., best effort). According to an embodiment, the CLI-RS beam that each UE determines based on the resources allocated from the base station may be a single beam. According to an embodiment, the UE may determine the CLI-RS beam on its own based on a resource area allocated from the base station. According to various embodiments, in order to determine the CLI-RS beam on its own, the UE may determine the CLI-RS beam based on at least one of a PDSCH beam or PUSCH beam associated with a CLI-RS resource location, a beam used when receiving an SSB, a beam used when receiving a CSI-RS, or a beam used when transmitting an SRS. According to an embodiment, the PDSCH beam or PUSCH beam associated with the CLI-RS resource location may include a PDSCH beam or PUSCH beam in the slot (or previous slot) of the allocated CLI-RS resources. According to an embodiment, the UE may randomly determine the CLI-RS beam based on the allocated CLI-RS resources. The aforementioned scheme and criteria for the UE to determine the CLI-RS beam on its own are not limited thereto, and may be pre-defined or preconfigured by the base station according to various embodiments of the disclosure. According to an embodiment, each UE having received the CLI-RS resource location from the base station may determine the CLI-RS beam based on the received resource information. When the UE determines the CLI-RS beam in step 1235, step 1225 is performed.

In step 1225, according to various embodiments of the disclosure, the CLI-RS measurement UE and the CLI-RS transmission UE may perform CLI-RS transmission and reception based on the determined beams. Although not illustrated in FIG. 12, in step 1225, the CLI-RS transmission UE may transmit the CLI-RS to the CLI-RS measurement UE, based on the determined transmission beam. In step 1225, the CLI-RS measurement UE may receive the CLI-RS from the CLI-RS transmission UE and measure CLI based on the received CLI-RS.

Although not illustrated in FIG. 12, the CLI-RS measurement UE may perform CLI-RS measurement based on CLI-RS transmission and reception, and report CLI-RS measurement information to the base station. The CLI-RS measurement information reporting by the UE may follow the method of step 725 of FIG. 7.

Hereinafter, FIG. 13 to FIG. 16 illustrate operations relating to CLI-RS measurement and reporting by transmission and reception of multiple CLI-RS beams. A series of procedures described in FIG. 13 to FIG. 16 may be specific details for a series of procedures (step 705 to step 725) among the steps described in FIG. 7, and the procedures described via FIG. 13 to FIG. 16 may refer to independent procedures, or refer to at least one of the procedures as one step among all the steps of FIG. 7.

FIG. 13 illustrates a signal flow for interference measurement and reporting based on multiple beams according to various embodiments of the disclosure. Specifically, referring to FIG. 13, illustrated is a signal flow for CLI-RS measurement and reporting between a base station 1310 and at least one UE including a CLI-RS measurement UE 1320 and at least one CLI-RS transmission UE 1330.

In step 1305, the base station 1310 may configure CLI measurement for the CLI-RS measurement UE 1320 and the CLI-RS transmission UE 1330. Specifically, the base station 1310 may allocate resources for reception or transmission, to the CLI-RS measurement UE 1320 and the CLI-RS transmission UE 1330, respectively. According to an embodiment, information on the resources allocated by the base station 1310 may include information on a CLI-RS ID mapped or grouped for each resource. According to an embodiment, the resources allocated by the base station to each UE may be mapped or grouped to one beam. According to an embodiment, beam information may be explicitly designated in the resources allocated by the base station 1310 to each UE. That is, a single beam may be mapped or grouped in the resources for CLI-RS reception or transmission allocated by the base station 1310 to the CLI-RS measurement UE 1320 or the CLI-RS transmission UE 1330. According to an embodiment, beam information may not be designated in the resources allocated by the base station 1310 to each UE. That is, the base station may indicate only a CLI-RS resource identifier (ID) for the allocated resources, and at least one beam to be mapped or grouped may be determined by the UE. For example, if a beam is not explicitly indicated in each resource area, each UE may determine, via self-determination or various methods, a beam corresponding to the allocated resources and to the CLI-RS ID included in the resources, even without an explicit indication of the base station.

Prior to step 1315 and step 1325, the CLI-RS measurement UE 1320 and the CLI-RS transmission UE 1330 may determine multiple CLI-RS reception beams and multiple CLI-RS transmission beams, respectively. According to an embodiment, when the multiple CLI-RS transmission and reception beams are determined, the CLI-RS transmission UE and the CLI-RS reception UE may perform beam sweeping during CLI-RS transmission and reception. According to an embodiment, the beam sweeping may include reception side beam coordination or transmission side beam coordination. According to an embodiment, the CLI-RS reception UE may receive information on the CLI-RS transmission beam (e.g., fixed beam) from the CLI-RS transmission UE, and may identify at least one CLI-RS reception beam based on the received information. The CLI-RS reception UE may transmit information on the identified CLI-RS reception beam to the CLI-RS transmission UE. The CLI-RS reception UE may receive a CLI-RS based on information on the CLI-RS transmission beam and the identified CLI-RS reception beam. According to an embodiment, the CLI-RS transmission UE may receive information on the CLI-RS reception beam (e.g., fixed beam) from the CLI-RS reception UE, and may identify at least one CLI-RS transmission beam based on the received information. The CLI-RS transmission UE may transmit information on the identified CLI-RS transmission beam to the CLI-RS reception UE. The CLI-RS transmission UE may transmit a CLI-RS based on information on the CLI-RS reception beam and the identified CLI-RS transmission beam. For example, during reception side beam coordination (or sweeping), the transmission beam may be fixed, and the reception UE may perform measurement by sequentially applying the reception beam. On the contrary, during transmission side beam coordination, the reception beam may be fixed, and measurement may be performed by sequentially applying the transmission beam. In the above descriptions, the transmission side UE and the reception side UE may provide, to each other, beam information (e.g., the fixed beam or sequentially applied beam) for beam sweeping in order to perform beam sweeping. For example, for transmission side fixation, the CLI-RS transmission UE may transmit information on the fixed beam to the CLI-RS reception UE, and the CLI-RS reception UE may transmit, to the CLI-RS transmission UE, information on CLI-RS reception beams that are sequentially changed and applied.

In step 1315, the CLI-RS transmission UE 1330 may transmit a CLI-RS to the CLI-RS measurement UE 1320 via a CLI-RS transmission beam determined based on the allocated resources for CLI-RS transmission. According to an embodiment, the CLI-RS transmission beam determined by the CLI-RS transmission UE 1330 or the CLI-RS reception beam determined by the CLI-RS measurement UE 1320 may include one of the multiple beams. According to an embodiment, the CLI-RS transmission beam determined by the CLI-RS transmission UE 1330 or the CLI-RS reception beam determined by the CLI-RS measurement UE 1320 may each include a beam indicated by the base station 1310. According to an embodiment, the CLI-RS transmission beam determined by the CLI-RS transmission UE 1330 or the CLI-RS reception beam determined by the CLI-RS measurement UE 1320 may each include a beam determined by UE self-determination (e.g., best effort), etc.

The CLI-RS measurement UE 1330 may transmit the CLI-RS to the CLI-RS measurement UE 1320 via one beam (e.g., CLI-RS transmission beam#0 or beam#X) among the CLI-RS transmission beams determined based on the allocated resources for CLI-RS transmission. The CLI-RS measurement UE 1330 may provide information on the determined one beam to the CLI-RS measurement UE 1320. The CLI-RS measurement UE 1320 may receive the CLI-RS from the CLI-RS transmission UE 1330 by sequentially applying the CLI-RS reception beams (e.g., CLI-RS reception beam#0 and beam#X) determined based on the allocated resources for CLI-RS reception. The CLI-RS measurement UE 1330 may provide information on the sequentially applied reception beams to the CLI-RS transmission UE 1330. According to an embodiment, the CLI-RS transmission UE may transmit the CLI-RS via each of the determined CLI-RS transmission beams, and the CLI-RS reception UE may receive, via the determined CLI-RS reception beams, the CLI-RS transmitted by each of the CLI-RS transmission beams.

For example, the CLI-RS transmission UE 1330 may transmit the CLI-RS via one beam (e.g., CLI-RS transmission beam#0) among the CLI-RS transmission beams, and the CLI-RS measurement UE 1320 may receive the CLI-RS via at least one beam (e.g., CLI-RS reception beam#0 to beam#X) among the CLI-RS reception beams, in step 1315. In addition, the CLI-RS transmission UE 1330 may transmit the CLI-RS via one beam (e.g., CLI-RS transmission beam#X) among the CLI-RS transmission beams, and the CLI-RS measurement UE 1320 may receive the CLI-RS via at least one beam (e.g., CLI-RS reception beam#0 to beam#X) among the CLI-RS reception beams, in step 1325. The aforementioned steps 1315 to 1325 may operate similarly to the beam sweeping according to transmission beam fixation, but are not limited thereto, and according to various embodiments of the disclosure, beam sweeping according to reception beam fixation may be performed. According to an embodiment, the CLI-RS measurement UE 1320 may perform CLI measurement based on the CLI-RSs received from the CLI-RS transmission UE 1330.

In step 1335, the CLI-RS measurement UE 1320 may report measured CLI information to the base station 1310. According to various embodiments of the disclosure, the CLI-RS measurement UE 1320 may report the CLI-RS measurement information to the base station 1310 by various methods. According to an embodiment, the CLI-RS measurement UE 1320 may report the CLI-RS measurement information to the base station 1310 by using CLI-RS reporting resources allocated from the base station 3010. Hereinafter, reporting methods that the CLI-RS measurement UE 1320 may determine are described.

Method 1) Full CLI report: The CLI-RS measurement UE 1320 may report, to the base station 1310, all information on at least one beam pair used for CLI-RS transmission and reception.

Method 2) Smallest CLI report: The CLI-RS measurement UE 1020 may report, to the base station 1310, a CLI-RS index indicating at least one beam pair having a smallest interference value among measured CLI values. The index of the at least one beam pair having the smallest interference value, which is reported by the CLI-RS measurement UE 1320, may be an index of at least one beam pair based on the CLI-RS received from at least one CLI-RS transmission UE. According to an embodiment, information reported by the CLI-RS measurement UE 1320 may be an index for at least one beam pair including a beam pair having an N-th lowest interference value as well as an index for a beam pair having a lowest interference value. According to an embodiment, an N value may be preconfigured by the base station.

Method 3) CLI average report: The CLI-RS measurement UE 1320 may calculate an average of interference values of all at least one beam pair used for CLI-RS transmission and reception, and report information on an average value to the base station 1310.

Method 4) Threshold value-compared CLI report: The CLI-RS measurement UE 1320 may report, based on a threshold value to the base station 1310, interference values for at least one beam pair used for CLI-RS transmission and reception. Specifically, according to an embodiment, the CLI-RS measurement UE 1320 may report, to the base station 1310, information on one or more beam pairs having interference values equal to or smaller than the threshold value and index information thereof. According to an embodiment, the threshold value may be preconfigured by the base station 1310, or may be predefined in the UE itself.

Method 5) Blacklist report: The CLI-RS measurement UE 1320 may determine, as a blacklist, an index for a part of at least one beam pair used for CLI-RS transmission and reception, and report the blacklist. Specifically, the CLI-RS measurement UE 1320 may determine the blacklist to be one or more beam pairs having high interference values and report the blacklist to the base station 1310, and the base station 1310 may perform scheduling for data channel transmission and reception, except for the one or more beam pairs included in the blacklist. According to an embodiment, the CLI-RS measurement UE 1320 may determine, based on a specific reference interference value, the blacklist to be one or more beam pairs having interference values equal to or greater than the reference interference value, and the reference interference value may be configured by the base station or may be predefined in the UE itself. However, the method of determining a blacklist according to various embodiments of the disclosure is not limited thereto, and may include various methods, such as determining a blacklist to be one or more beam pairs in which a specific event has occurred.

As described above, the CLI-RS measurement UE 1320 may determine at least one of method 1) to method 5) based on various reasons, such as feedback overhead, and may report the CLI-RS measurement information to the base station 1310 via the determined method. However, according to various embodiments of the disclosure, the CLI-RS measurement information is not limited to being reported according to an individual method, and the CLI-RS measurement UE 1320 may report the CLI-RS measurement information to the base station 1310 via at least one of method 1) to method 5) or a combination thereof.

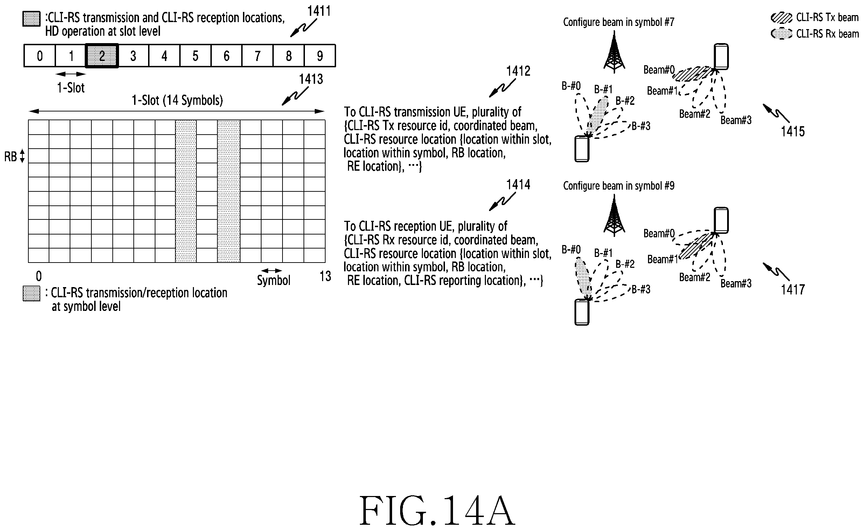

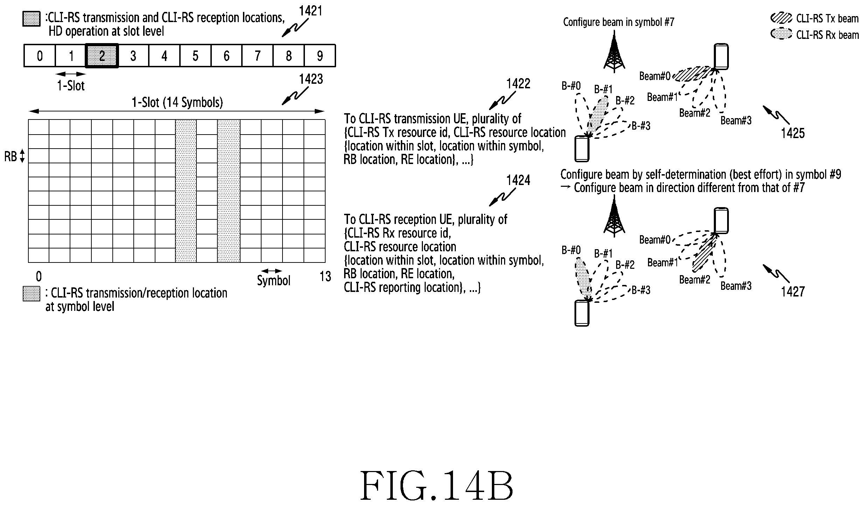

FIG. 14A and FIG. 14B illustrate examples of determining multiple beams for interference measurement according to various embodiments of the disclosure. Specifically, referring to FIG. 14A and FIG. 14B, illustrated is an example in which a CLI-RS measurement UE and a CLI-RS transmission UE determine a CLI-RS reception beam and a CLI-RS transmission beam to be a single beam, respectively, based on resource allocation from a base station.

According to various embodiments of the disclosure, the base station may allocate resources for reception and transmission, to the CLI-RS measurement UE and the CLI-RS transmission UE, respectively. According to an embodiment, information on the resources allocated by the base station may include information on a CLI-RS ID mapped or grouped for each resource. According to an embodiment, the resources allocated by the base station to each UE may be mapped or grouped to one beam.

According to an embodiment of the disclosure, multiple resources allocated by the base station to each UE may be mapped (or including grouping) to multiple beams, respectively. According to an embodiment, the multiple resources allocated by the base station to each UE may include information (e.g., a resource ID and a resource location) on CLI-RS beams mapped to the multiple resources. The CLI-RS beams mapped to the multiple resources allocated by the base station may include a coordinated beam. A coordinated beam may include a PDSCH beam or a PUSCH beam, which corresponds to the location (e.g., slot or symbol) of the resources allocated by the base station to each UE, a beam used when each UE receives a synchronization signal block (SSB), or a beam used when each UE receives a channel state information (CSI)-RS. That is, the base station may transmit, to the CLI-RS transmission UE, at least one of a CLI-RS transmission resource ID, information on a coordinated beam, or information on a CLI-RS resource location (e.g., a location within a slot, a location within a symbol, a resource block (RB) location, or a resource element (RE) location). The base station may transmit, to the CLI-RS measurement UE, at least one of a CLI-RS reception resource ID, information on a coordinated beam, or information on a CLI-RS resource location (e.g., a location within a slot, a location within a symbol, a resource block (RB) location, or a resource element (RE) location).

According to an embodiment, referring to FIG. 14A, when the base station allocates a resource including symbol #7 of slot #2 and a resource including symbol #9 of slot #2 to the CLI-RS transmission UE and the CLI-RS measurement UE, information including a CLI-RS transmission/reception resource ID and information on the coordinated beam may be configured together for each UE. According to an embodiment, information on the coordinated beam configured by the base station may be individually mapped to each resource. Each UE which has received the resource including symbol #7 of slot #2 and information on a coordinated beam mapped thereto from the base station may coordinate 1415 and 1417 a CLI-RS beam, based on the received resource and coordinated beam information. In addition, each UE which has received the resource including symbol #9 of slot #2 and information on a coordinated beam mapped thereto from the base station may coordinate 1417 a CLI-RS beam, based on the received resource and coordinated beam information. For example, the CLI-RS transmission UE may receive resource allocation and information on a coordinated beam mapped thereto from the base station, and the coordinated beam information may include information (e.g., information on a PUSCH transmission beam on another symbol in the same slot) on a beam at a PUSCH transmission location (symbol) associated with a CLI-RS resource location (symbol). For example, the CLI-RS measurement UE may receive resource allocation and coordinated beam information from the base station, and the coordinated beam information may include information (e.g., information on a PDSCH reception beam in a previous slot) on a beam at a PDSCH reception location (slot) associated with a CLI-RS resource location (slot). According to an embodiment, the CLI-RS transmission UE may determine 1415 a CLI-RS transmission beam to be beam#0 mapped to the resource including symbol #7 of slot #2, based on the received information. According to an embodiment, the CLI-RS measurement UE may determine 1415 a CLI-RS reception beam to be B-#1 mapped to the resource including symbol #7 of slot #2, based on the received information. In addition, according to an embodiment, the CLI-RS transmission UE may determine 1417 a CLI-RS transmission beam to be beam#1 mapped to the resource including symbol #9 of slot #2, based on the received information. According to an embodiment, the CLI-RS measurement UE may determine 1417 a CLI-RS reception beam to be B-#0 mapped to the resource including symbol #9 of slot #2, based on the received information. According to various embodiments of the disclosure, the CLI-RS measurement UE and the CLI-RS transmission UE may perform CLI-RS transmission and reception based on the determined beams.

According to an embodiment of the disclosure, the resources allocated by the base station to each UE may be mapped (or including grouping) to one beam. According to an embodiment, when multiple resources allocated by the base station to each UE do not include information on CLI-RS beams mapped to the multiple resources, each UE may determine a CLI-RS beam by self-determination (e.g., best effort). According to an embodiment, the CLI-RS beam that each UE determines based on the multiple resources allocated from the base station may be one beam for each resource.

According to an embodiment, the UE may determine the CLI-RS beam on its own based on a resource area allocated from the base station. According to various embodiments, in order to determine the CLI-RS beam on its own, the UE may determine the CLI-RS beam based on at least one of a PDSCH beam or PUSCH beam associated with a CLI-RS resource location, a beam used when receiving an SSB, a beam used when receiving a CSI-RS, or a beam used when transmitting an SRS. According to an embodiment, the PDSCH beam or PUSCH beam associated with the CLI-RS resource location may include a PDSCH beam or PUSCH beam in the slot (or previous slot) of the allocated CLI-RS resources. According to an embodiment, the UE may randomly determine the CLI-RS beam based on the allocated CLI-RS resources. The aforementioned scheme and criteria for the UE to determine the CLI-RS beam on its own are not limited thereto, and may be pre-defined or preconfigured by the base station according to various embodiments of the disclosure.

According to an embodiment, referring to FIG. 11B, when the base station allocates a resource including symbol #7 of slot #2 and a resource including symbol #9 of slot #2 to the CLI-RS transmission UE and the CLI-RS measurement UE, a CLI-RS transmission/reception resource ID (e.g., including a CLI-RS resource location) may be configured for each UE. Each UE having received the CLI-RS resource location from the base station may determine 1425 and 1427 a CLI-RS beam based on the received resource information. According to an embodiment, the CLI-RS transmission UE may receive information on resource allocation including symbol #7 of slot #2 from the base station, and may determine 1425 beam#0 to be a CLI-RS transmission beam, based on the aforementioned UE self-determination.

According to an embodiment, the CLI-RS measurement UE may receive information on resource allocation including symbol #7 of slot #2 from the base station, and may determine 1425 B-#1 to be a CLI-RS reception beam, based on the aforementioned UE self-determination. In addition, according to an embodiment, the CLI-RS transmission UE may receive information on resource allocation including symbol #9 of slot #2 from the base station, and may determine 1427 beam#2 to be the CLI-RS transmission beam, based on the aforementioned UE self-determination. According to an embodiment, the CLI-RS measurement UE may receive information on resource allocation including symbol #9 of slot #2 from the base station, and may determine 1427 B-#0 to be the CLI-RS reception beam, based on the aforementioned UE self-determination. According to an embodiment, the beam determined based on the resource allocation including symbol #9 of slot #2 may be determined in a direction different from that for the beam determined based on the resource allocation including symbol #9 of slot #2. According to various embodiments of the disclosure, the CLI-RS measurement UE and the CLI-RS transmission UE may perform CLI-RS transmission and reception based on the determined beams.

According to various embodiments of the disclosure, although FIG. 14A and FIG. 14B illustrate an example in which a resource including symbol #7 of slot #2 and a resource including symbol #9 of slot #2 are allocated, the disclosure is not limited thereto. The number of resource areas and resources allocated by a base station may be plural, and accordingly it is obvious that the number of CLI-RS beams selected by a UE may also be plural.

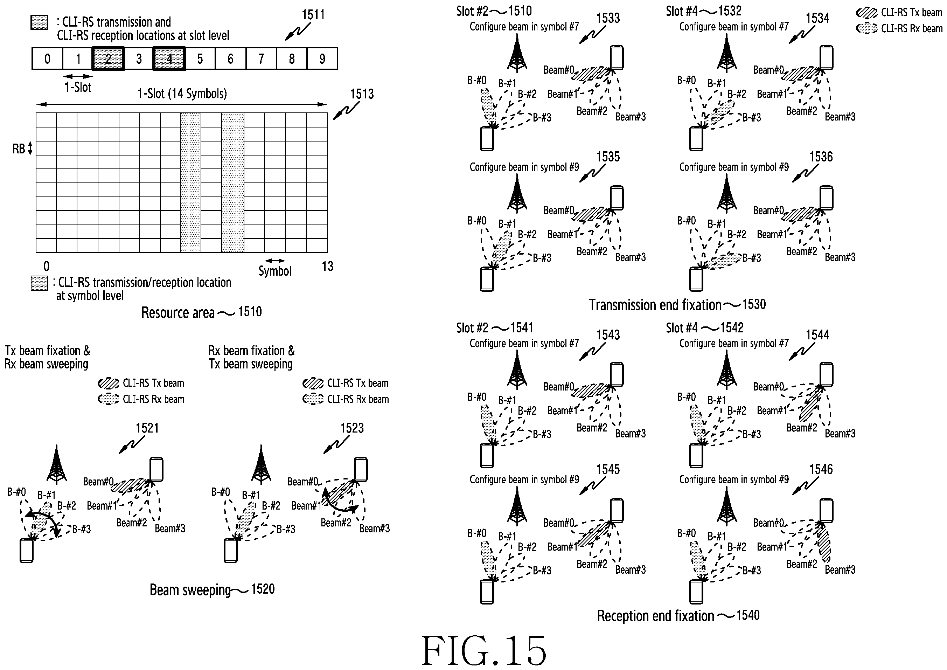

FIG. 15 illustrates an example of measuring interference via beam sweeping based on multiple beams according to various embodiments of the disclosure. Specifically, referring to FIG. 15, various examples for CLI-RS transmission and measurement between a CLI-RS transmission UE and a CLI-RS measurement UE are illustrated.

According to an embodiment, a base station may allocate, to a CLI-RS transmission UE and a CLI-RS measurement UE, multiple resources for transmission and reception. According to an embodiment, the multiple resources for transmission and reception, which are allocated to each UE, may include information on mapped CLI-RS beams. An operation for a UE to determine a mapped CLI-RS beam is specifically illustrated in FIG. 14A. According to an embodiment, each UE may determine, on its own, a CLI-RS beam mapped to each beam, based on the allocated multiple resources for transmission and reception. An operation for the UE to determine the CLI-RS beam on its own is specifically illustrated in FIG. 14A. For example, the base station may allocate 1510 resources for symbols #7 and #9 of slot #2 and resources for symbols #7 and #9 of slot #4 to each UE.

According to an embodiment, each of the UEs allocated with the multiple resources may determine CLI-RS beams, based on the allocated resources. According to an embodiment, each UE may determine CLI-RS beams, based on information on CLI-RS beams mapped to the multiple resources. According to an embodiment, each UE may determine, on its own, CLI-RS transmission beams and CLI-RS reception beams mapped to respective beams, based on the allocated multiple resources for transmission and reception.

According to an embodiment, each UE may perform CLI-RS transmission and reception 1520 via beam sweeping based on the determined CLI-RS transmission beam and CLI-RS reception beam. According to an embodiment, transmission and reception, in which the CLI-RS transmission beam is fixed and the CLI-RS reception beam is swept, may be performed 1521. According to an embodiment, transmission and reception, in which the CLI-RS reception beam is fixed and the CLI-RS transmission beam is swept, may be performed 1523. However, this is only an example and the disclosure is not limited thereto. Each UE may perform CLI-RS beam transmission and reception via various methods (e.g., transmission and reception via any CLI-RS beam). The beam sweeping described above may be substantially the same as step 715 of FIG. 7.

According to an embodiment, the CLI-RS transmission UE and the CLI-RS measurement UE may determine beam#0 as the CLI-RS transmission beam and determine B-#0, B-#1, B-#2, and B-#3 as the CLI-RS reception beams, based on a resource 1533 for symbol #7 of slot #2, a resource 1534 for symbol #7 of slot #4, a resource 1535 for symbol #9 of slot #2, and a resource 1536 for symbol #9 of slot #4, respectively. That is, by determining the number of CLI-RS reception beams available for one CLI-RS transmission beam to be four, CLI-RS transmission and reception may be performed for each beam pair according to CLI-RS transmission beam fixation and CLI-RS reception beam sweeping. According to an embodiment, as described above, the CLI-RS transmission and reception beams of each UE may be determined based on beams explicitly designated by the base station or based on UE itself-determination.

According to an embodiment, the CLI-RS transmission UE and the CLI-RS measurement UE may determine beam#0, beam#1, beam#2, and beam#3 as the CLI-RS transmission beams and determine B-#0 as the CLI-RS reception beam, based on a resource 1543 for symbol #7 of slot #2, a resource 1544 for symbol #7 of slot #4, a resource 1545 for symbol #9 of slot #2, and a resource 1546 for symbol #9 of slot #4, respectively. That is, by determining the number of CLI-RS transmission beams available for one CLI-RS reception beam to be four, CLI-RS transmission and reception may be performed for each beam pair according to CLI-RS reception beam fixation and CLI-RS transmission beam sweeping. According to an embodiment, as described above, the CLI-RS transmission and reception beams of each UE may be determined based on beams explicitly designated by the base station or based on UE itself-determination.

According to an embodiment, the CLI-RS reception UE may receive information on the CLI-RS transmission beam (e.g., fixed beam) from the CLI-RS transmission UE, and may identify at least one CLI-RS reception beam based on the received information. The CLI-RS reception UE may transmit information on the identified CLI-RS reception beam to the CLI-RS transmission UE. The CLI-RS reception UE may receive a CLI-RS based on information on the CLI-RS transmission beam and the identified CLI-RS reception beam. According to an embodiment, the CLI-RS transmission UE may receive information on the CLI-RS reception beam (e.g., fixed beam) from the CLI-RS reception UE, and may identify at least one CLI-RS transmission beam based on the received information. The CLI-RS transmission UE may transmit information on the identified CLI-RS transmission beam to the CLI-RS reception UE. The CLI-RS transmission UE may transmit a CLI-RS based on information on the CLI-RS reception beam and the identified CLI-RS transmission beam.

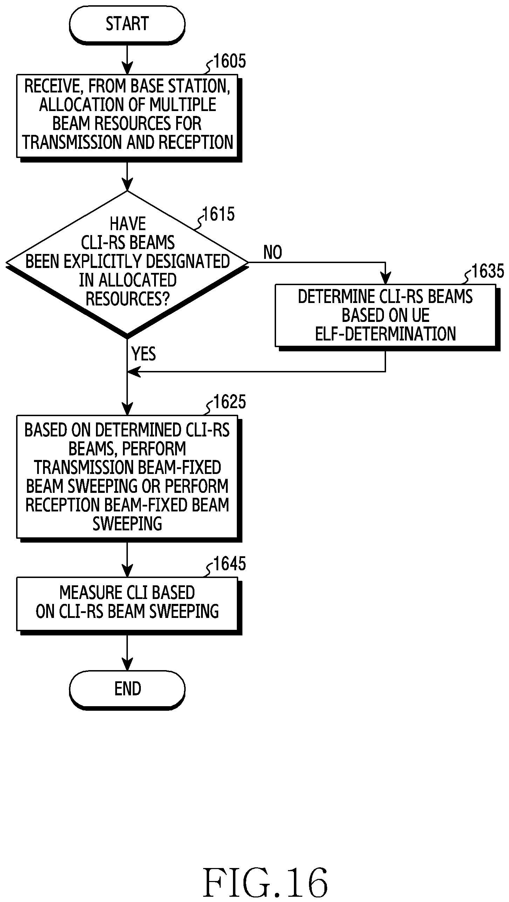

FIG. 16 illustrates a UE operation flow of interference measurement and reporting based on multiple beams according to various embodiments of the disclosure. Specifically, referring to FIG. 16, illustrated is an operation flow of a CLI-RS measurement UE or a CLI-RS transmission UE for determining a CLI-RS beam based on resources allocated from a base station. In addition, a UE in the following may include a CLI-RS transmission UE that determines a CLI-RS transmission beam to transmit a CLI-RS, and a CLI-RS reception UE that determines a CLI-RS reception beam to receive a CLI-RS.

In step 1605, a UE may receive, from a base station, an allocation of resources for CLI-RS transmission and reception. Specifically, if the UE is a CLI-RS transmission UE, the UE may receive, from the base station, an allocation of resources for signal transmission, or if the UE is a CLI-RS measurement (e.g., reception) UE, the UE may receive, from the base station, an allocation of resources for signal reception. According to an embodiment, information on the resources allocated by the base station may include information on a CLI-RS ID mapped or grouped for each resource. According to an embodiment, the resources allocated by the base station to each UE may be mapped or grouped to one or more beams. According to an embodiment, beam information may be explicitly designated in the resources allocated by the base station to each UE. That is, at least one beam may be mapped or grouped in the resources for CLI-RS reception or transmission, which are allocated by the base station to the CLI-RS measurement or transmission UE, but the disclosure is not limited thereto. According to various embodiments of the disclosure, the base station may indicate only a CLI-RS resource identifier (ID) for the allocated resources, and the at least one beam to be mapped or grouped may be determined by the UE.

In step 1615, the UE may determine whether a beam for CLI-RS transmission is explicitly designated in the resources allocated from the base station. According to an embodiment, although not illustrated in FIG. 16, step 915 of FIG. 9 may be performed before or after step 1615. For example, the UE may identify, prior to CLI-RS beam determination, at least one CLI-RS transmission/reception beam among multiple available beams, based on the resources for transmission and reception, which are allocated from the base station.

According to an embodiment of the disclosure, in step 1615, if a CLI-RS beam is explicitly designated in the multiple resources allocated to the UE from the base station, step 1625 is performed. According to an embodiment, the resources allocated by the base station to each UE may be mapped (or including grouping) to one beam. According to an embodiment, the multiple resources allocated by the base station to each UE may include information (e.g., a resource ID and a resource location) on CLI-RS beams mapped to the multiple resources. The CLI-RS beams mapped to the multiple resources allocated by the base station may include a coordinated beam. A coordinated beam may include a PDSCH beam or a PUSCH beam, which corresponds to the location (e.g., slot or symbol) of the resources allocated by the base station to each UE, a beam used when each UE receives a synchronization signal block (SSB), or a beam used when each UE receives a channel state information (CSI)-RS. That is, the base station may transmit, to the CLI-RS transmission UE, at least one of a CLI-RS transmission resource ID, information on a coordinated beam, or information on a CLI-RS resource location (e.g., a location within a slot, a location within a symbol, a resource block (RB) location, or a resource element (RE) location). The base station may transmit, to the CLI-RS measurement UE, at least one of a CLI-RS reception resource ID, information on a coordinated beam, or information on a CLI-RS resource location (e.g., a location within a slot, a location within a symbol, a resource block (RB) location, or a resource element (RE) location). According to an embodiment, each UE having received the multiple resources and coordinated beam information from the base station may determine multiple CLI-RS beams, based on the received multiple resources and coordinated beam information.

In step 1625, the CLI-RS measurement UE and the CLI-RS transmission UE may perform CLI-RS transmission and reception based on the determined multiple beams. According to an embodiment, each UE may perform CLI-RS transmission and reception via the determined CLI-RS beams. According to an embodiment, transmission and reception, in which the CLI-RS transmission beam is fixed and the CLI-RS reception beams is swept, may be performed. According to an embodiment, transmission and reception, in which the CLI-RS reception beam is fixed and the CLI-RS transmission beam is swept, may be performed. However, this is only an example and the disclosure is not limited thereto. Each UE may perform CLI-RS beam transmission and reception via various methods (e.g., transmission and reception via any CLI-RS beam). The CLI-RS transmission and reception and CLI-RS measurement via multiple CLI-RS transmission beams or CLI-RS reception beams are specifically illustrated in FIG. 7, FIG. 14A and FIG. 14B.

According to an embodiment of the disclosure, in step 1615, if a CLI-RS beam is not explicitly included in the resources allocated to the UE from the base station, step 1635 is performed. According to an embodiment, the resources allocated by the base station to each UE may be mapped (or including grouping) to one beam. According to an embodiment, when multiple resources allocated by the base station to each UE do not include information on CLI-RS beams mapped to the multiple resources, each UE may determine CLI-RS beams by self-determination (e.g., best effort). According to an embodiment, the UE may determine CLI-RS beams on its own based on a resource area allocated from the base station. According to various embodiments, in order to determine CLI-RS beams on its own, the UE may determine the CLI-RS beams based on at least one of a PDSCH beam or PUSCH beam associated with a CLI-RS resource location, a beam used when receiving an SSB, a beam used when receiving a CSI-RS, or a beam used when transmitting an SRS. According to an embodiment, the PDSCH beam or PUSCH beam associated with the CLI-RS resource location may include a PDSCH beam or PUSCH beam in the slot (or previous slot) of the allocated CLI-RS resources. According to an embodiment, the UE may randomly determine the CLI-RS beams based on the allocated CLI-RS resources. The aforementioned scheme and criteria for the UE to determine the CLI-RS beams on its own are not limited thereto, and may be pre-defined or preconfigured by the base station according to various embodiments of the disclosure. According to an embodiment, each UE having received the CLI-RS resource location from the base station may determine the CLI-RS beams based on the received resource information. When the UE determines the CLI-RS beams in step 1635, step 1625 is performed.

In step 1625, according to various embodiments of the disclosure, the CLI-RS measurement UE and the CLI-RS transmission UE may perform CLI-RS transmission and reception based on the determined multiple beams. According to an embodiment, each UE may perform CLI-RS transmission and reception via the determined CLI-RS beams. According to an embodiment, transmission and reception, in which the CLI-RS transmission beam is fixed and the CLI-RS reception beams is swept, may be performed. According to an embodiment, transmission and reception, in which the CLI-RS reception beam is fixed and the CLI-RS transmission beam is swept, may be performed. However, this is only an example and the disclosure is not limited thereto. Each UE may perform CLI-RS beam transmission and reception via various methods (e.g., transmission and reception via any CLI-RS beam). The CLI-RS transmission and reception and CLI-RS measurement via multiple CLI-RS transmission beams or CLI-RS reception beams are specifically illustrated in FIG. 7, FIG. 14A and FIG. 14B.

In step 1645, the CLI-RS measurement UE may perform CLI-RS measurement for each CLI-RS beam pair, based on the CLI-RS received from the CLI-RS transmission UE, and may report CLI-RS measurement information to the base station. The CLI-RS measurement information reporting by the UE may follow the method of step 725 of FIG. 7.

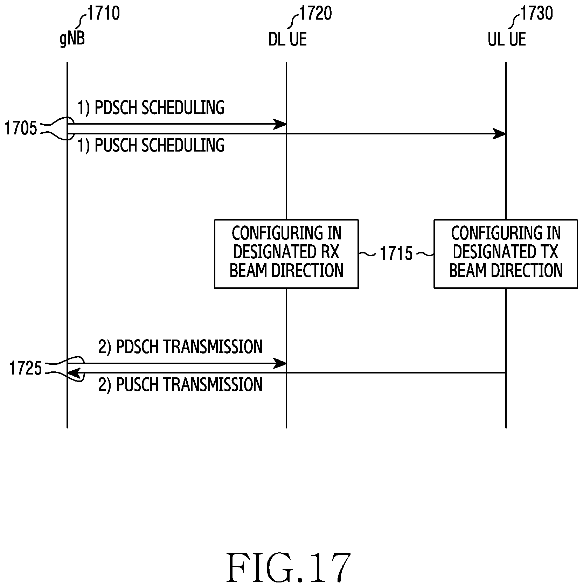

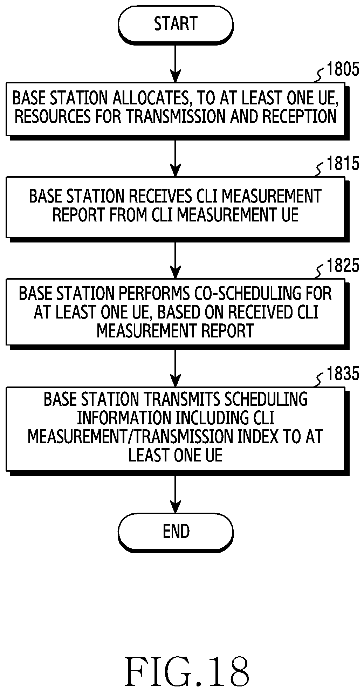

Hereinafter, FIG. 17 and FIG. 18 illustrate data channel scheduling and data channel transmission and reception based on CLI-RS measurement and reporting. A series of procedures described in FIG. 17 and FIG. 18 may be specific details for a series of procedures (step 735 to step 755) among the steps described in FIG. 7, and the procedures described via FIG. 17 and FIG. 18 may refer to independent procedures, or refer to at least one of the procedures as one step among all the steps of FIG. 7.

FIG. 17 illustrates a signal flow for scheduling data channel transmission and reception, based on interference measurement according to various embodiments of the disclosure.

In step 1705, a base station 1710 may determine a beam for downlink reception and a beam for uplink transmission, based on a measurement result or a channel quality indicator (CQI) value reported from a CLI-RS measurement UE. The base station 1710 may provide co-scheduling information to a DL UE 1720 or a UL UE 1730, based on information on the determined beams. According to an embodiment, the base station 1710 may simultaneously schedule a PDUSCH or a PUSCH to the DL UE or the UL UE. According to an embodiment, the base station 1710 may co-schedule the DL UE 1720 or the UL UE 1730 to use beams used by a CLI-RS transmission UE and a CLI-RS reception UE during CLI-RS transmission and reception. Specifically, the base station 1710 may co-schedule the DL UE 1720 or the UL UE 1730 by using a CLI-RS index. The CLI-RS index used by the base station 1710 may indicate a reception beam used for PDSCH reception or a transmission beam used for PUSCH transmission. Referring to FIG. 17, the disclosure describes a PDSCH and a PUSCH, but the disclosure is not limited thereto, and various downlink or uplink signals may be included. According to an embodiment, the DL UE 1720 may include a CLI-RS measurement UE or a CLI-RS transmission UE, and the UL UE 1730 may also include a CLI-RS measurement UE or a CLI-RS transmission UE.

Specifically, in step 1705, the base station 1710 may perform scheduling for the UE 1720 for DL reception or the UE 1730 for UL transmission, based on CLI-RS measurement information. According to an embodiment, the base station 1710 may perform scheduling based on a channel quality indicator (CQI) reported from at least one UE in addition to the CLI-RS measurement information reported from the CLI-RS measuring UE. Specifically, the base station 1710 may indicate the UE to use, for DL or UL, a beam that has been used during CLI-RS measurement. For example, the base station 1710 may determine an optimal beam pair based on the reported CLI-RS measurement information, and may configure or schedule a beam direction so that the UE may transmit and receive a data channel, etc. via the determined optimal beam pair. The base station 1710 may indicate, using the CLI-RS index, the transmission and reception beams used during DL/UL signal transmission and reception. According to an embodiment, the base station 1710 may schedule UL transmission (e.g., PUSCH) for the CLI-RS transmission UE by indicating an index (e.g., a CLI-RS resource number) for the CLI-RS transmission beam including a beam pair determined to enable minimizing of interference among at least one beam used by the CLI-RS transmission UE for CSI-RS transmission. Alternatively, the base station 1710 may schedule DL transmission (e.g., PDSCH) for the CLI-RS measurement UE by indicating an index (e.g., a CLI-RS resource number) for the CLI-RS reception beam including a beam pair determined to enable minimizing of interference among at least one beam used by the CLI-RS measurement UE for CSI-RS reception. According to an embodiment, the base station 1710 may estimate UE-to-UE CLI based on the reported CLI-RS measurement information, and may perform FD co-scheduling between UEs having low CLI values. According to an embodiment, the base station 1710 may estimate CLI between beam pairs of the UEs, based on the reported CLI-RS measurement information, and may perform FD co-scheduling for a beam pair having a low CLI value.

However, the aforementioned examples are only examples, and the disclosure is not limited thereto. For example, there may be a situation where channel reciprocity is satisfied, for example, there may be a case where a condition, in which a channel quality is not significantly affected in general even if a downlink transmission/reception beam pair of a base station and a UE is used as an uplink transmission/reception beam pair, is satisfied. According to an embodiment, in various cases including a situation where channel reciprocity is satisfied, the base station 1710 may, unlike the scheduling described above, schedule UL transmission (e.g., PUSCH) for the CLI-RS measurement UE by indicating the index for the CLI-RS reception beam, and schedule DL reception (e.g., PDSCH) for the CLI-RS transmission UE by indicating the index for the CLI-RS transmission beam.

According to an embodiment, for data transmission and reception via a single link between the base station 1710 and each UE, beam indication signaling for indicating an optimal beam pair may be performed separately. For example, the base station and the UE may use a reference signal to determine an appropriate transmission/reception beam pair via beam management, beam sweeping, or the like. Referring to 5G NR standard specifications, the base station may transmit a transmission configuration indication (TCI) state including beam indication via downlink control information (DCI) to inform the UE that a downlink signal is being transmitted on the same beam as that for the configured RS. Therefore, beam indication signaling for the single-link communication described above may need to be distinguished from beam indication signaling based on CLI-RS according to various embodiments of the disclosure. According to various embodiments of the disclosure, as the FD base station environment, in an asymmetric full-duplex system where DL or UL is co-scheduled for at least one UE, additional L1 signaling or radio resource control (RRC) signaling may be used separately from existing beam indication signaling in order to perform beam indication scheduling that minimizes interference between links with the respective UEs. According to an embodiment, the base station 1710 may configure a beam for a data channel by using an additional separate bit of DCI to schedule data channel transmission and reception for each UE by using the CLI-RS index. According to an embodiment, during scheduling of data channel transmission and reception for each UE without using an additional separate bit, the base station 1710 may configure a beam for a data channel by a method of separately configuring a bandwidth part (BWP).

In step 1715, the DL UE 1720 which has been PDSCH-scheduled by the base station 1710 may determine, based on the received beam index (e.g., the CLI-RS resource number) for CLI-RS reception, a beam configured for a certain time point according to the CLI-RS ID, on which the UE should operate, and may determine the determined beam as a reception beam for data channel reception. The UL UE 1730 which has been PUSCH-scheduled by the base station 1710 may determine, based on the received beam index (e.g., the CLI-RS resource number) for CLI-RS transmission, a beam configured for a certain time point according to the CLI-RS ID, on which the UE should operate, and may determine the determined beam as a transmission beam for data channel transmission. However, according to various embodiments of the disclosure, but not limited thereto, when channel reciprocity can be considered as described above, the DL UE 1720 may be a CLI-RS transmission UE and the UL UE 1730 may be a CLI-RS measurement UE. Although not illustrated in FIG. 17, according to an embodiment, each UE may receive not only a CLI-RS beam index but also a beam indication indicating a beam pair via a single link, and the base station may separately configure one of multiple beam indications, which will be used to determine a data channel transmission/reception beam.

In step 1725, each UE may transmit or receive a data channel signal by using the configured transmission beam or reception beam. According to an embodiment, the DL UE 1720 may receive a PDSCH transmitted from the base station in the configured reception beam direction, or the UL UE 1730 may transmit a PUSCH to the base station in the configured transmission beam direction. However, without being limited thereto, according to an embodiment, when channel reciprocity can be considered, the DL UE 1720 may be a CLI-RS transmission UE and the UL UE 1730 may be a CLI-RS measurement UE. According to various embodiments of the disclosure, a signal transmitted and received by each UE will be referred to as an FD PUSCH or an FD PDSCH, but is not limited thereto, and the signal may include various signals (a sounding reference signal (SRS), a physical uplink control channel (PUCCH), a physical downlink control channel (PDCCH), and a de-modulation reference signal (DMRS)) in addition to a data channel.

FIG. 18 illustrates a base station operation flow of receiving an interference measurement report from a UE and performing scheduling in the FD system according to various embodiments of the disclosure.

In step 1805, a base station may configure CLI measurement for a CLI-RS measurement UE and at least one CLI-RS transmission UE. Specifically, the base station may allocate at least one resource for CLI-RS reception or transmission, to the CLI-RS measurement UE and the at least one CLI-RS transmission UE, respectively. According to an embodiment, information on resources allocated by the base station may include information on a CLI-RS ID (or index) mapped or grouped for each resource. According to an embodiment, the resources allocated by the base station to each UE may be mapped or grouped to one or more beams. Each UE may identify the number of resources allocated by the base station to each UE, and a procedure thereof may be similar to the operation specifically described in FIG. 9. According to an embodiment, beam information may be explicitly designated in the resources allocated by the base station to each UE. That is, at least one beam may be mapped or grouped in the resources for CLI-RS reception or transmission, which are allocated by the base station to the CLI-RS measurement UE or at least one CLI-RS transmission UE, but the disclosure is not limited thereto. According to various embodiments of the disclosure, the base station may indicate only a CLI-RS resource identifier (ID) for the allocated resources, and the at least one beam to be mapped or grouped may be determined by the UE. The aforementioned procedure may be similar to the operation specifically described in FIG. 12 or FIG. 16.

In step 1815, the base station may receive measured CLI information from the CLI-RS measurement UE. According to an embodiment, the CLI-RS measurement UE may report the CLI-RS measurement information to the base station by using CLI-RS reporting resources allocated from the base station. According to various embodiments of the disclosure, the base station may receive reporting of the CLI-RS measurement information from the CLI-RS measurement UE by various methods. The methods for the base station to receive the CLI-RS measurement information from the CLI-RS measurement UE may include at least one or a combination of methods 1) to 5) described in step 725 of FIG. 7. According to various embodiments of the disclosure, the CLI-RS measurement information reported to the base station may include information measured based on various methods for CLI-RS transmission and reception and CLI-RS measurement described in FIG. 9 to FIG. 16 or a combination thereof.

In step 1825, the base station may determine a beam for DL reception and a beam for UL transmission, based on the CLI-RS measurement information. The base station may provide co-scheduling information to the UE for DL and the UE for UL, based on information on the determined beam for DL reception and beam for UL reception. According to an embodiment, the base station may perform scheduling based on a channel quality indicator (CQI) reported from at least one UE in addition to the CLI-RS measurement information reported from the CLI-RS measuring UE. Specifically, the base station may indicate the UE to use, for DL or UL, a beam which has been used during CLI-RS measurement. For example, the base station may determine an optimal beam pair based on the reported CLI-RS measurement information, and may configure or schedule a beam direction so that the UE may transmit and receive a data channel, etc. via the determined optimal beam pair. The base station may indicate, using the CLI-RS index, the transmission and reception beams used during DL/UL signal transmission and reception. According to an embodiment, the base station may schedule UL transmission (e.g., PUSCH) for the CLI-RS transmission UE by indicating an index (e.g., a CLI-RS resource number) for the CLI-RS transmission beam including a beam pair determined to enable minimizing of interference among at least one beam used by the CLI-RS transmission UE for CSI-RS transmission. Alternatively, the base station may schedule DL transmission (e.g., PDSCH) for the CLI-RS measurement UE by indicating an index (e.g., a CLI-RS resource number) for the CLI-RS reception beam including a beam pair determined to enable minimizing of interference among at least one beam used by the CLI-RS measurement UE for CSI-RS reception. According to an embodiment, the base station may estimate UE-to-UE CLI based on the reported CLI-RS measurement information, and may perform FD co-scheduling between UEs having low CLI values. According to an embodiment, the base station may estimate CLI between beam pairs of the UEs, based on the reported CLI-RS measurement information, and may perform FD co-scheduling for a beam pair having a low CLI value.

However, the aforementioned examples are only examples, and the disclosure is not limited thereto. For example, there may be a situation where channel reciprocity is satisfied, for example, there may be a case where a condition, in which a channel quality is not significantly affected in general even if a downlink transmission/reception beam pair of a base station and a UE is used as an uplink transmission/reception beam pair, is satisfied. According to an embodiment, in various cases including a situation where channel reciprocity is satisfied, the base station may, unlike the scheduling described above, schedule UL transmission (e.g., PUSCH) for the CLI-RS measurement UE 720 by indicating the index for the CLI-RS reception beam, and schedule DL reception (e.g., PDSCH) for the CLI-RS transmission UE by indicating the index for the CLI-RS transmission beam.

According to an embodiment, for data transmission and reception via a single link between the base station and each UE, beam indication signaling for indicating an optimal beam pair may be performed separately. For example, the base station and the UE may use a reference signal to determine an appropriate transmission/reception beam pair via beam management, beam sweeping, or the like. Referring to 5G NR standard specifications, the base station may transmit a transmission configuration indication (TCI) state including beam indication via downlink control information (DCI) to inform the UE that a downlink signal is being transmitted on the same beam as that for the configured RS. Therefore, beam indication signaling for the single-link communication described above may need to be distinguished from beam indication signaling based on CLI-RS according to various embodiments of the disclosure. According to various embodiments of the disclosure, as the FD base station environment, in an asymmetric full-duplex system where DL or UL is co-scheduled for at least one UE, additional L1 signaling or radio resource control (RRC) signaling may be used separately from existing beam indication signaling in order to perform beam indication scheduling that minimizes interference between links with the respective UEs. According to an embodiment, the base station may configure a beam for a data channel by using an additional separate bit of DCI to schedule data channel transmission and reception for each UE by using the CLI-RS index. According to an embodiment, during scheduling of data channel transmission and reception for each UE without using an additional separate bit, the base station may configure a beam for a data channel by a method of separately configuring a bandwidth part (BWP).

According to an embodiment, although not illustrated in FIG. 18, the base station may cause each UE to transmit or receive a data channel signal by using the transmission beam or reception beam configured based on scheduling. According to an embodiment, the DL UE may receive a PDSCH transmitted from the base station in the configured reception beam direction, or the UL UE may transmit a PUSCH to the base station in the configured transmission beam direction. According to various embodiments of the disclosure, a signal transmitted and received by each UE will be referred to as an FD PUSCH or an FD PDSCH, but is not limited thereto, and the signal may include various signals (a sounding reference signal (SRS), a physical uplink control channel (PUCCH), a physical downlink control channel (PDCCH), and a de-modulation reference signal (DMRS)) in addition to a data channel.

According to various embodiments of the disclosure, a method performed by a UE supporting a full-duplex (FD) system in a wireless communication system may include: receiving, from a base station, an allocation of resources for receiving at least one cross-linked interference-reference signal (CLI-RS); based on the allocated resources, determining at least one CLI-RS reception beam among multiple available beams; based on the at least one CLI-RS reception beam, receiving a CLI-RS from at least one other UE; based on the received CLI-RS, measuring interference with the at least one other UE; transmitting, to the base station, measurement information generated based on a result of the measurement; based on a downlink reception beam determined based on the measurement information, receiving co-scheduling information from the base station; and receiving a downlink signal from the base station via a downlink reception beam determined based on the co-scheduling information.

According to an embodiment, the method may further include determining, based on the allocated resources, whether resources for multiple CLI-RS reception beams have been allocated, and when the resources for the multiple CLI-RS reception beams have been allocated, determining the multiple CLI-RS reception beams based on the resources.

According to an embodiment, the method may further include, based on the determined multiple CLI-RS reception beams, performing beam sweeping to receive the CLI-RS.

According to an embodiment, the performing of beam sweeping to receive the CLI-RS may further include receiving CLI-RS transmission beam information from the at least one other UE, identifying the multiple CLI-RS reception beams based on the received transmission beam information, transmitting information on the identified CLI-RS reception beams to the at least one other UE, and receiving the CLI-RS via the CLI-RS transmission beam information and the identified multiple CLI-RS reception beams.

According to an embodiment, the determining, based on the allocated resources, the at least one CLI-RS reception beam among the multiple available beams may further include, based on the allocated resources, when a predetermined CLI-RS beam is identifiable, determining an indicated CLI-RS beam as the CLI-RS reception beam, and based on the allocated resources, when no predetermined CLI-RS beam is identifiable, determining the CLI-RS reception beam based on the allocated resources and a specific criterion.

According to an embodiment, the determining of the indicated CLI-RS beam as the CLI-RS reception beam may include receiving information on a coordinated beam mapped to the allocated resources, and determining the CLI-RS reception beam based on the received information on the coordinated beam, wherein the coordinated beam includes at least one of a physical downlink shared channel (PDSCH) beam, a physical uplink shared channel (PUSCH) beam, a beam used when receiving a synchronization signal block (SSB), or a beam used when receiving a channel state information-reference signal (CSI-RS), which corresponds to a location of the allocated resources.

According to an embodiment, the determining of the CLI-RS reception beam based on the allocated resources and the specific criterion may include determining the CLI-RS reception beams based on a PDSCH beam or a PUSCH beam associated with a location of the allocated resources.

According to various embodiments of the disclosure, a method performed by a base station supporting a full-duplex (FD) system in a wireless communication system may include: allocating, to a first UE, resources for receiving at least one cross-linked interference-reference signal (CLI-RS), and allocating, to a second UE, resources for transmitting at least one CLI-RS; receiving a CLI-RS measurement report from the first UE; based on the CLI-RS measurement report, determining a first beam for downlink reception of the first UE and a second beam for uplink transmission of the second UE; based on information on the determined first beam and second beam, providing the first UE and the second UE with co-scheduling information for the first UE and the second UE; and based on the co-scheduling information, transmitting a downlink signal to the first UE and receiving an uplink signal from the second UE.

According to an embodiment, the CLI-RS measurement report may include at least one of a full CLI report, a smallest CLI report, a CLI average report, a CLI report based on a threshold value, or a blacklist report.

According to an embodiment, the co-scheduling information may be used to transmit a signal to and receive a signal from the first UE or the second UE in a half-duplex (HD) manner, and may be provided to the first UE or the second UE via higher layer signaling.

According to various embodiments of the disclosure, a UE supporting a full-duplex (FD) system in a wireless communication system may include at least one transceiver, and at least one processor functionally coupled to the at least one transceiver, wherein the at least one processor is configured to: receive, from a base station, an allocation of resources for receiving at least one cross-linked interference-reference signal (CLI-RS); based on the allocated resources, determine at least one CLI-RS reception beam among multiple available beams; based on the at least one CLI-RS reception beam, receive a CLI-RS from at least one other terminal; based on the received CLI-RS, measure interference with the at least one other terminal; transmit, to the base station, measurement information generated based on a result of the measurement; based on a downlink reception beam determined based on the measurement information, receive co-scheduling information from the base station; and receive a downlink signal from the base station via a downlink reception beam determined based on the co-scheduling information.

According to an embodiment, the at least one processor may be further configured to determine, based on the allocated resources, whether resources for multiple CLI-RS reception beams have been allocated, and when the resources for the multiple CLI-RS reception beams have been allocated, determine the multiple CLI-RS reception beams based on the resources.

According to an embodiment, the at least one processor may be further configured to, based on the determined multiple CLI-RS reception beams, perform beam sweeping to receive the CLI-RS.

According to an embodiment, in order to perform the beam sweeping to receive the CLI-RS, the at least one processor may be further configured to receive CLI-RS transmission beam information from the at least one other UE, identify the multiple CLI-RS reception beams based on the received transmission beam information, transmit information on the identified CLI-RS receptions beam to the at least one other UE, and receive the CLI-RS via the CLI-RS transmission beam information and the identified multiple CLI-RS reception beams.

According to an embodiment, in order to determine, based on the allocated resources, the at least one CLI-RS reception beam among the multiple available beams, the at least one processor may be further configured to, based on the allocated resources, when a predetermined CLI-RS beam is identifiable, determine an indicated CLI-RS beam as the CLI-RS reception beam, and based on the allocated resources, when no predetermined CLI-RS beam is identifiable, determine the CLI-RS reception beam based on the allocated resources and a specific criterion.

According to an embodiment, in order to determine the indicated CLI-RS beam as the CLI-RS reception beam, the at least one processor may be configured to receive information on a coordinated beam mapped to the allocated resources, and determine the CLI-RS reception beam based on the received information on the coordinated beam, wherein the coordinated beam includes at least one of a physical downlink shared channel (PDSCH) beam, a physical uplink shared channel (PUSCH) beam, a beam used when receiving a synchronization signal block (SSB), or a beam used when receiving a channel state information-reference signal (CSI-RS), which corresponds to a location of the allocated resources.

According to an embodiment, in order to determine the CLI-RS reception beam based on the allocated resources and the specific criterion, the at least one processor may be configured to determine the CLI-RS reception beams based on a PDSCH beam or a PUSCH beam associated with a location of the allocated resources.

According to various embodiments of the disclosure, a base station supporting a full-duplex (FD) system in a wireless communication system may include at least one transceiver, and at least one processor functionally coupled to the at least one transceiver, wherein the at least one processor is configured to: allocate, to a first UE, resources for receiving at least one cross-linked interference-reference signal (CLI-RS), and allocate, to a second UE, resources for transmitting at least one CLI-RS; receive a CLI-RS measurement report from the first UE; based on the CLI-RS measurement report, determine a first beam for downlink reception of the first UE and a second beam for uplink transmission of the second UE; based on information on the determined first beam and second beam, provide the first UE and the second UE with co-scheduling information for the first UE and the second UE; and based on the co-scheduling information, transmit a downlink signal to the first UE and receive an uplink signal from the second UE.

According to an embodiment, the CLI-RS measurement report may include at least one of a full CLI report, a smallest CLI report, a CLI average report, a CLI report based on a threshold value, or a blacklist report.

According to an embodiment, the co-scheduling information may be used to transmit a signal to and receive a signal from the first UE or the second UE in a half-duplex (HD) manner, and may be provided to the first UE or the second UE via higher layer signaling.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal supporting a full-duplex (FD) system in a wireless communication system, the method comprising:
receiving, from a base station, an allocation of resources for receiving at least one cross-linked interference-reference signal (CLI-RS);
based on the allocated resources, determining at least one CLI-RS reception beam among multiple available beams;
based on the at least one CLI-RS reception beam, receiving a CLI-RS from at least one other terminal;
based on the received CLI-RS, measuring interference with the at least one other terminal;
transmitting, to the base station, measurement information generated based on a result of the measurement;
based on a downlink reception beam determined based on the measurement information, receiving co-scheduling information from the base station; and
receiving a downlink signal from the base station via a downlink reception beam determined based on the co-scheduling information.

2. The method of claim 1, further comprising:
based on the allocated resources, determining whether resources for multiple CLI-RS reception beams have been allocated; and
in case that the resources for the multiple CLI-RS reception beams have been allocated, determining the multiple CLI-RS reception beams based on the resources.

3. The method of claim 2, further comprising, based on the determined multiple CLI-RS reception beams, performing beam sweeping to receive the CLI-RS.

4. The method of claim 3, wherein the performing of beam sweeping to receive the CLI-RS further comprises:
receiving CLI-RS transmission beam information from the at least one other terminal;
based on the received transmission beam information, identifying the multiple CLI-RS reception beams;
transmitting information on the identified CLI-RS reception beams to the at least one other terminal; and
receiving the CLI-RS via the CLI-RS transmission beam information and the identified multiple CLI-RS reception beams.

5. The method of claim 1, wherein the determining, based on the allocated resources, the at least one CLI-RS reception beam among the multiple available beams further comprises:
based on the allocated resources, in case that a predetermined CLI-RS beam is identifiable, determining an indicated CLI-RS beam as the CLI-RS reception beam; and
based on the allocated resources, in case that no predetermined CLI-RS beam is identifiable, determining the CLI-RS reception beam based on the allocated resources and a specific criterion.

6. The method of claim 5, wherein the determining of the indicated CLI-RS beam as the CLI-RS reception beam comprises:
receiving information on a coordinated beam mapped to the allocated resources; and
determining the CLI-RS reception beam based on the received information on the coordinated beam,
wherein the coordinated beam comprises at least one of a physical downlink shared channel (PDSCH) beam, a physical uplink shared channel (PUSCH) beam, a beam used when receiving a synchronization signal block (SSB), or a beam used when receiving a channel state information-reference signal (CSI-RS), which corresponds to a location of the allocated resources.

7. The method of claim 5, wherein the determining of the CLI-RS reception beam based on the allocated resources and the specific criterion comprises determining the CLI-RS reception beam based on a PDSCH beam or a PUSCH beam associated with a location of the allocated resources.

8. A method performed by a base station supporting a full-duplex (FD) system in a wireless communication system, the method comprising:
allocating, to a first terminal, resources for receiving at least one cross-linked interference-reference signal (CLI-RS), and allocating, to a second terminal, resources for transmitting at least one CLI-RS;
receiving a CLI-RS measurement report from the first terminal;
based on the CLI-RS measurement report, determining a first beam for downlink reception of the first terminal and a second beam for uplink transmission of the second terminal;
based on information on the determined first beam and second beam, providing the first terminal and the second terminal with co-scheduling information for the first terminal and the second terminal; and
based on the co-scheduling information, transmitting a downlink signal to the first terminal and receiving an uplink signal from the second terminal.

9. The method of claim 8, wherein the CLI-RS measurement report comprises at least one of a full CLI report, a smallest CLI report, a CLI average report, a CLI report based on a threshold value, or a blacklist report.

10. The method of claim 8, wherein the co-scheduling information is used to transmit a signal to and receive a signal from the first terminal or the second terminal in a half-duplex (HD) manner, and is provided to the first terminal or the second terminal via higher layer signaling.

11. A terminal supporting a full-duplex (FD) system in a wireless communication system, the terminal comprising:
at least one transceiver; and
at least one processor functionally coupled to the at least one transceiver,
wherein the at least one processor is configured to:
receive, from a base station, an allocation of resources for receiving at least one cross-linked interference-reference signal (CLI-RS);
based on the allocated resources, determine at least one CLI-RS reception beam among multiple available beams;
based on the at least one CLI-RS reception beam, receive a CLI-RS from at least one other terminal;
based on the received CLI-RS, measure interference with the at least one other terminal;
transmit, to the base station, measurement information generated based on a result of the measurement;
based on a downlink reception beam determined based on the measurement information, receive co-scheduling information from the base station; and
receive a downlink signal from the base station via a downlink reception beam determined based on the co-scheduling information.

12. The terminal of claim 11, wherein the at least one processor is further configured to:
based on the allocated resources, determine whether resources for multiple CLI-RS reception beams have been allocated; and
in case that the resources for the multiple CLI-RS reception beams have been allocated, determine the multiple CLI-RS reception beams based on the resources.

13. The terminal of claim 12, wherein the at least one processor is further configured to, based on the determined multiple CLI-RS reception beams, perform beam sweeping to receive the CLI-RS.

14. The terminal of claim 13, wherein the at least one processor is further configured to, in order to perform the beam sweeping to receive the CLI-RS:
receive CLI-RS transmission beam information from the at least one other terminal;
based on the received transmission beam information, identify the multiple CLI-RS reception beams;
transmit information on the identified CLI-RS reception beams to the at least one other terminal; and
receive the CLI-RS via the CLI-RS transmission beam information and the identified multiple CLI-RS reception beams.

15. The terminal of claim 11, wherein the at least one processor is further configured to, in order to determine the at least one CLI-RS reception beam among the multiple available beams, based on the allocated resources:
based on the allocated resources, in case that a predetermined CLI-RS beam is identifiable, determine an indicated CLI-RS beam as the CLI-RS reception beam; and
based on the allocated resources, in case that no predetermined CLI-RS beam is identifiable, determine the CLI-RS reception beam based on the allocated resources and a specific criterion.
